# EUROPÄISCHE PATENTSCHRIFT

(11) **EP 3 412 928 B1**
(45) Veröffentlichungstag und Bekanntmachung des Hinweises auf die Patenterteilung: **08.04.2020**
(21) Anmeldenummer: 18172888.2
(22) Anmeldetag: 17.05.2018
(51) Int. Cl.: F16F 9/516, F16F 9/48, F16F 9/06, B62K 25/08

(54) **STOSSEINRICHTUNG INSBESONDERE FÜR EIN FAHRRAD**
SHOCK ABSORBING DEVICE, IN PARTICULAR FOR A MOTOR VEHICLE
DISPOSITIF D'AMORTISSMENT TRACTION, EN PARTICULIER POUR UNE BICYCLETTE

(30) Priorität: 18.05.2017 DE 102017110889
(43) Veröffentlichungstag der Anmeldung: 12.12.2018
(73) Patentinhaber: DT Swiss AG, 2504 Biel (CH)
(72) Erfinder: Walthert, Martin, CH-3270 Aarberg (CH); Richter, Karsten, CH-2502 Biel (CH); Zbinden, Samuel, CH-2503 Biel (CH)
(74) Vertreter: BSB Patentanwälte Schütte & Engelen Partnerschaft mbB

(56) Entgegenhaltungen:
- EP-A1- 2 413 001
- WO-A1-2014/190387

## Beschreibung

Die vorliegende Erfindung betrifft eine Stoßeinrichtung und insbesondere einen Stoßdämpfer für ein wenigstens teilweise muskelbetriebenes Zweirad und insbesondere ein Fahrrad und umfasst wenigstens ein Dämpfungssystem mit einem Dämpferzylinder und einem darin angeordneten beweglichen Kolben, der mit einer aus dem Dämpferzylinder herausgeführten Kolbenstange verbunden ist. Besonders bevorzugt betrifft die Erfindung eine Federgabel für ein wenigstens teilweise muskelbetriebenes Zweirad und insbesondere ein Fahrrad.

Im Stand der Technik sind verschiedenste Stoßdämpfer für Fahrräder mit und ohne elektrischen Hilfsmotor bekannt geworden. Bei Zweirädern, die wenigstens teilweise muskelbetrieben sind, spielt das Gewicht eine erhebliche Rolle, insbesondere, wenn es um den Einsatz in Sport- oder Wettkampfrädern geht. Zur Gewichtsreduktion wird bei Zweiradkomponenten ein nicht unerheblicher Aufwand betrieben.

Mountainbikes werden oftmals mit einer Federgabel und einem Hinterradstoßdämpfer ausgerüstet. Durch die Stoßeinrichtungen an dem Vorder- und Hinterrad werden Stöße bei Bergabfahrten gedämpft, sodass der Komfort gesteigert wird. Weiterhin kann auch die Fahrsicherheit erhöht werden, da die Räder des Fahrrads eine bessere Traktion aufweisen.

Bei bekannten Federgabeln ist oftmals eine Vielzahl von Strömungsventilen vorgesehen, die die Druckstufendämpfung in Abhängigkeit von der Einfedergeschwindigkeit steuern. Neben Steuerventilen für geringe Geschwindigkeiten (Low-Speed) sind auch Steuerventile für den Hochgeschwindigkeitsbereich (High-Speed) vorgesehen, um über den gesamten Geschwindigkeitsbereich angepasste und geeignete Dämpfungseigenschaften zur Verfügung zu stellen. Mit den bekannten Hinterrad-Stoßdämpfern und Federgabeln können in weiten Bereichen zufriedenstellende Eigenschaften erreicht werden.

Es hat sich aber herausgestellt, dass es in bestimmten Fahrsituationen schwierig sein kann, optimale Dämpfungseigenschaften in der Druckstufe bereitzustellen. Der Schwerpunkt eines sitzenden Fahrer bei einer schnellen Abfahrt befindet sich typischerweise eher im hinteren Bereich des Fahrrads. Dadurch ist das Vorderrad entlastet und die Federgabel ist zunächst nur wenig eingefedert. In solchen Fahrsituationen ist es an sich wünschenswert, dass die Federgabel mit einer geringen Druckstufendämpfung betrieben wird und somit kleine oder mittelgroße Hindernisse einfach ausgleicht, fast ohne dass der Fahrer die Hindernisse in den Händen und Armen spürt. Dazu muss eine geringe Druckstufendämpfung eingestellt werden. Tritt nun ein starker Schlag auf, steht gegebenenfalls nicht mehr sehr viel Federweg zur Verfügung, sodass eine besonders harte Highspeed-Druckstufendämpfung eingesetzt werden muss. Das kann aber schon den Nachteil haben, dass auch bei kleinen Schlägen eine entsprechend starke Dämpfung hervorgerufen wird. Deshalb ist die Federgabel bei einer Fahrt mit kleinen Hindernissen unkomfortabler als sie sein müsste.

Mit der WO 2014/190387 A1 ist ein Stoßdämpfer für Fahrräder bekannt geworden, bei dem in einer Dämpferkammer ein Kolben zwei mit dem Dämpfungsfluid gefüllte Kammern voneinander trennt. Das durch beim Eintauchen der Kolbenstange verdrängte Volumen des Dämpfungsfluids wird zu einer externen Ausgleichskammer geleitet, wo ein Trennkolben das Arbeitsfluid von einer Gaskammer trennt. Um unterschiedliche Dämpfungsstärken über dem Federweg zur Verfügung zu stellen, ist die Dämpferkammer von einem zylindrischen Hohlraum umgeben und es sind über der Länge der Dämpferkammer eine Vielzahl von Bypassbohrungen vorgesehen, die die Dämpferkammer mit dem zylindrischen Hohlraum verbinden. Dadurch wird beim Einfedern mit steigender Ausnützung des Federweges die Dämpfungskraft immer größer, da die Anzahl der Bypassverbindungen abnimmt. Es wird damit auch eine stärkere Endlagendämpfung realistiert. Dieser bekannte Stoßdämpfer funktioniert, umfasst aber eine schwere Stahlfeder und verfügt über einen komplexen Aufbau, der um die Dämpferkammer herum noch einen zylindrischen Hohlraum mit einer Vielzahl von Bypassbohrungen erfordert.

Dokument EP 2 413 001 offenbart eine ähnliche Stoßeinrichtung.

Es ist deshalb die Aufgabe der vorliegenden Erfindung, eine einfacher aufgebaute und leichtere Stoßeinrichtung für ein wenigstens teilweise muskelbetriebenes Zweirad und insbesondere ein Fahrrad zu Verfügung zu stellen, welcher bei kleinen Schlägen bei zum Beispiel einer schnellen Abfahrt weicher reagiert und welcher bei starken Hindernissen oder bei der Landung von Sprüngen und dergleichen einen ausreichend großen Federweg zur Verfügung stellt.

Diese Aufgabe wird gelöst durch eine Stoßeinrichtung mit den Merkmalen des Anspruchs 1. Bevorzugte Weiterbildungen der erfindungsgemäßen Stoßeinrichtung werden in den Unteransprüchen definiert. Weitere Vorteile und Merkmale der vorliegenden Erfindung ergeben sich aus der allgemeinen Beschreibung und der Beschreibung der Ausführungsbeispiele.

Eine erfindungsgemäße Stoßeinrichtung für ein wenigstens teilweise muskelbetriebenes Zweirad und insbesondere ein Fahrrad umfasst ein Dämpfungssystem mit einem Dämpferzylinder und einem darin angeordneten beweglichen Kolben, der mit einer aus dem Dämpferzylinder herausgeführten Kolbenstange verbunden ist. Dabei wirkt der Kolben (in der Druckstufe) beim Eintauchen der Kolbenstange von einer weiter oder maximal ausgetauchten und zum Beispiel neutralen Grundposition in eine weiter oder maximal eingetauchte Position und zum Beispiel Endposition auf eine erste Dämpfungskammer in dem Dämpferzylinder ein. Das Dämpfungssystem ist derart ausgebildet, dass beim Eintauchen der Kolbenstange Dämpfungsfluid von der ersten Dämpfungskammer zu einer Zusatzkammer überführt wird. Dabei kann das ganze Dämpfungsfluid oder auch nur ein Teil des Dämpfungsfluids überführt werden. Ein Strömungswiderstand zum Überführen des Dämpfungsfluids in die Zusatzkammer ist wegabhängig ausgebildet und hängt (direkt oder indirekt) von einer Kolbenposition ab. Der Strömungswiderstand (zum Überführen des Dämpfungsfluids in die Zusatzkammer) ist in einem die Grundposition einschließenden ersten Wegabschnitt des Kolbens kleiner als in wenigstens einem weiter eingetauchten zweiten Wegabschnitt. Zwischen dem ersten Wegabschnitt und dem zweiten Wegabschnitt ist ein Übergangsabschnitt vorgesehen. Die Zusatzkammer bildet ein Ausgleichsvolumen für ein Volumen der Kolbenstange. An der Zusatzkammer ist ein durch eine Vorspanneinrichtung vorbelasteter Trennkolben vorgesehen. Eine Position des Trennkolbens ist abhängig von einer Kolbenposition. In die Zusatzkammer führen wenigstens ein erster und wenigstens ein zweiter Kanal hinein, um Dämpfungsfluid in die Zusatzkammer einzuleiten. Der zweite Kanal wird durch den Trennkolben wenigstens teilweise verschlossen, wenn sich der Kolben in dem Übergangsabschnitt befindet.

Die Grundposition kann dabei eine Anfangsposition sein oder zum Beispiel eine Position, die sich im unbelasteten Zustand eines mit solch einer Stoßeinrichtung ausgerüsteten Zweirads ergibt. Bevorzugt ist es auch, dass die Grundposition die SAG-Position angibt, die sich einstellt, wenn der Fahrer sich im Stillstand auf ein damit ausgerüstetes Zweirad setzt. Durch das Eigengewicht und das Gewicht des Fahrers bedingt federn die Stoßeinrichtungen wie Federgabel und Hinterradstoßdämpfer um ein bestimmtes Maß ein, welches die SAG-Position definiert. Auch diese Position stellt eine Grund- oder Anfangsposition dar, die sich zu Beginn einer Fahrt einstellt.

Die erfindungsgemäße Stoßeinrichtung hat viele Vorteile. Ein erheblicher Vorteil der erfindungsgemäßen Stoßeinrichtung besteht darin, dass eine wegabhängige Dämpfung zur Verfügung gestellt wird, wobei der Strömungswiderstand und somit die Dämpfung in einem die Grundposition einschließenden ersten Wegabschnitt kleiner ist als in einem weiter eingetauchten zweiten Wegabschnitt. Eine wegabhängige Dämpfung, die auf einem ersten (kleinen) Wegstück geringer ist als auf dem sich anschließenden Wegstück bietet den Vorteil, dass bei einer schnellen Abfahrt kleine Stöße weich gedämpft werden, sodass sich die entsprechenden Stöße nicht oder nur sehr wenig auf die Hände und Arme des Fahrers übertragen. Dadurch bietet die erfindungsgemäße Stoßeinrichtung einen großen Komfort. Trifft der Fahrer aber auf ein stärkeres Hindernis, so arbeitet die Stoßeinrichtung über den ganzen Federweg, wobei eine entsprechend starke Druckstufendämpfung eingestellt wird. Dadurch, dass an der Zusatzkammer ein durch eine Vorspanneinrichtung vorbelasteter Trennkolben vorgesehen ist, der den zweiten Kanal wenigstens teilweise verschließt, wird ein einfacher Aufbau ermöglicht. Die Konstruktion ist unaufwendig und erlaubt eine kostengünstige und leichte Ausführung. Es ist nicht nötig, die Dämpferkammer mit einem zylindrischen Hohlraum zu umgeben, der eine Art Bypass für strömendes Öl bzw. das Dämpfungsfluid ermöglicht.

In bevorzugten Ausgestaltungen ist die Stoßeinrichtung als Stoßdämpfer ausgebildet. Insofern kann der Begriff "Stoßeinrichtung" in der vorliegenden Anmeldung durchgängig auf den Begriff "Stoßdämpfer" präzisiert werden. Ein solcher Stoßdämpfer kann insbesondere für das Vorderrad oder z. B. für das Hinterrad vorgesehen sein. Ein Stoßdämpfer für das Vorderrad wird auch als Federgabel bezeichnet. Ein Stoßdämpfer für das Hinterrad kann auch als Hinterradstoßdämpfer bezeichnet werden.

Vorzugsweise erstreckt sich der erste Wegabschnitt über eine Länge, die kürzer ist als die Hälfte des maximalen Kolbenhubs. Der erste Wegabschnitt kann sich von dem Anfang des Kolbenhubs (komplett ausgefahrener Zustand) aus erstrecken. Der erste Wegabschnitt kann aber auch z. B. erst an der Grundposition wie z.B. der unbelasteten Position oder der SAG-Position beginnen. Das bedeutet, dass sich vor dem ersten Wegabschnitt noch ein weiterer "ursprünglicher" Wegabschnitt befinden kann. Vorzugsweise enden der ursprüngliche Wegabschnitt und der erste Wegabschnitt insgesamt vor der Hälfte des maximalen Kolbenhubs. Der ursprüngliche Wegabschnitt ist - wenn vorhanden - vorzugsweise sehr kurz und insbesondere kürzer als 20% oder vorzugsweise 10% des ersten Wegabschnitts.

Insbesondere wird der Strömungswiderstand zum Überführen des Dämpfungsfluids in die Zusatzkammer am Ende des ersten Wegabschnitts erhöht. Das bedeutet, dass vorzugsweise bei der Hälfte (oder z. B. 40% oder 60%) des maximalen Kolbenhubs der Strömungswiderstand zum Überführen des Dämpfungsfluids in die Zusatzkammer deutlich größer ist als in der Grundposition.

Vorzugsweise ist der Strömungswiderstand zum Überführen des Dämpfungsfluids in die Zusatzkammer in einem mittleren Wegabschnitt zwischen dem ersten Wegabschnitt und einem Endabschnitt größer als in dem ersten Wegabschnitt. Zusätzlich ist es möglich, dass in einem Endabschnitt eine (noch) stärkere Endlagendämpfung vorgesehen ist. Wenn eine stärkere Endlagendämpfung vorgesehen ist, dann ist wegabhängig in dem ersten Wegabschnitt die Dämpfung kleiner als in dem zweiten Wegabschnitt und in dem zweiten Wegabschnitt ist die Dämpfung wegabhängig wiederum kleiner als in dem Endabschnitt. In dem evtl. vorhandenen "weiteren Wegabschnitt" vor dem ersten Wegabschnitt kann die Dämpfung wie im ersten Wegabschnitt oder auch anders sein. Eine stärkere Endlagendämpfung kann vorgesehen werden, um einen Durchschlagschutz zu bilden oder zu verstärken.

In bevorzugten Ausgestaltungen bleibt der Strömungswiderstand in dem ersten Wegabschnitt vorzugsweise im Wesentlichen und insbesondere (praktisch) unverändert. Im Wesentlichen unverändert bedeutet hier, dass die Änderung des Strömungswiderstands in Abhängigkeit von der Position in dem ersten Wegabschnitt vorzugsweise kleiner 10% beträgt.

In bevorzugten Weiterbildungen wird der Strömungswiderstand durch eine Veränderung des wirksamen Strömungsquerschnitts beeinflusst. Eine Veränderung des Strömungsquerschnitts ermöglicht eine effektive Beeinflussung des Strömungswiderstands und somit der Druckstufendämpfung.

Vorzugsweise schließt sich an den ersten Wegabschnitt (direkt) der Übergangsabschnitt an, in welchem der Strömungsquerschnitt verringert wird. Dadurch wird der Strömungswiderstand entsprechend erhöht. Dabei kann eine Verringerung des Strömungsquerschnitts über die Länge des Übergangsabschnittes kontinuierlich oder mehrstufig erfolgen.

Der Übergangsabschnitt ist vorzugsweise kürzer als 25% oder 20% des maximalen Kolbenhubs. Insbesondere schließt sich der zweite Wegabschnitt (direkt) an den Übergangsabschnitt an und erstreckt sich über eine Länge von zwischen 40% und 60% des maximalen Kolbenhubs.

In allen Ausgestaltungen ist es bevorzugt, dass der Kolben in dem Dämpferzylinder ein Dämpfungsvolumen variabel in die erste Dämpfungskammer und eine zweite Dämpfungskammer teilt. In derartigen Ausgestaltungen ist es bevorzugt, dass der Kolben mit wenigstens einer Drosseleinheit ausgerüstet ist, um in der Druckstufe und/oder der Zugstufe einen Durchfluss von Dämpfungsfluid durch den Kolben zu ermöglichen.

Die Zusatzkammer bildet ein Ausgleichsvolumen für ein Volumen der Kolbenstange. An der Zusatzkammer ist ein durch eine Vorspanneinrichtung vorbelasteter Trennkolben vorgesehen. Dabei ist eine Position des Trennkolbens abhängig von einer Kolbenposition. Besonders bevorzugt liegt eine eindeutige Zuordnung einer Position des Kolbens zu einer Position des Trennkolbens vor. Das bedeutet, dass eine Position des Kolbens eindeutig eine Position des Trennkolbens (und umgekehrt) definiert.

Möglich ist es aber auch, dass die Zusatzkammer die zweite Dämpfungskammer bildet und das Dämpfungsfluid von der ersten Dämpfungskammer zu der Zusatzkammer überführt wird, wenn das Rohrsystem komprimiert wird oder einfedert. Dementsprechend wird dann das Dämpfungsfluid von der Zusatzkammer zu der ersten Dämpfungskammer überführt, wenn das Rohrsystem wieder ausfedert.

In die Zusatzkammer führen wenigstens der erste Kanal und wenigstens der zweite Kanal. Über den ersten Kanal und den zweiten Kanal ist es möglich, Dämpfungsfluid in die Zusatzkammer einzuleiten.

Der zweite Kanal wird durch den Trennkolben wenigstens teilweise verschlossen, wenn sich der Kolben in dem Übergangsabschnitt befindet. Vorzugsweise ist der zweite Kanal geöffnet, wenn sich der Kolben in dem ersten Wegabschnitt befindet. In bevorzugten Ausgestaltungen ist der zweite Kanal vorzugsweise (im Wesentlichen vollständig oder vollständig) geschlossen, wenn sich der Kolben und/oder der Trennkolben in dem zweiten Wegabschnitt befinden. Der zweite Kanal kann dadurch verschlossen werden, dass ein (z. B. seitlicher) Einlass und/oder ein Auslass aus dem zweiten Kanal verschlossen wird. Der zweite Kanal kann auch im verschlossenen Zustand (an einem stirnseitigen Ende) einseitig geöffnet bleiben.

Möglich ist es auch, dass der Trennkolben einen Querschnittsanteil des ersten Kanals verschließt, wenn sich der Kolben in dem Übergangsabschnitt befindet.

Vorzugsweise ist der zweite Kanal (praktisch vollständig oder nahezu vollständig oder vollständig) verschlossen, wenn sich der Kolben in einem zweiten Wegabschnitt befindet, der sich an den Übergangsabschnitt anschließt. Unter einem "verschlossen Kanal" wird im Sinne der vorliegenden Anmeldung ein Kanal verstanden, der so weit verschlossen ist, dass ein freier Strömungsquerschnitt von weniger als 30% und insbesondere von weniger als 10% und vorzugsweise von weniger als 5% des maximalen freien Strömungsquerschnitts verbleibt. Vorzugsweise erstrecken sich der erste Wegabschnitt und der Übergangsabschnitt über weniger als die Hälfte des Kolbenhubs und somit über weniger als die Hälfte der maximalen Weglänge. Besonders bevorzugt wird der zweite Kanal durch den Trennkolben verschlossen, dessen Position von einer Position des Kolbens abhängt. Besonders bevorzugt ist oder wird der zweite Kanal vollständig verschlossen, wenn sich der Trennkolben in einem zweiten Wegabschnitt des Trennkolbens befindet, der sich an den Übergangsabschnitt des Trennkolbens anschließt.

In bevorzugten Ausgestaltungen erstrecken sich der erste Wegabschnitt und der Übergangsabschnitt über weniger als 45 % des maximalen Kolbenhubs und insbesondere über weniger als 40 % des Kolbenhubs. In vorteilhaften Ausgestaltungen können sich der erste Wegabschnitt (evtl. inklusive Übergangsabschnitt) über (etwa) ein Drittel des Kolbenhubs erstrecken. Durch eine solche Ausgestaltung wird in dem ersten Drittel des Federweges eine deutlich geringere Dämpfung eingestellt, während über den sich anschließenden Federweg die Dämpfung auch in dem Low-Speed-Bereich deutlich erhöht wird. Dadurch wird eine vorteilhafte Stoßeinrichtung zur Verfügung gestellt. Eine Stoßeinrichtung kann somit geringe und mittlere Stöße über den ersten Wegabschnitt weich dämpfen, während starke Stöße auch dort angemessen hart gedämpft werden.

In bevorzugten Weiterbildungen sind der erste Kanal und der zweite Kanal Strömungskanäle einer Drosseleinrichtung für die Druckstufe und insbesondere die Low-Speed-Druckstufe. Damit dienen der erste Kanal und der zweite Kanal vorzugsweise zur Dämpfung von kleineren und mittleren Stößen.

Vorzugsweise ist der Strömungswiderstand der Drosseleinrichtung für die Druckstufe und insbesondere die Low-Speed-Druckstufe von außen über wenigstens ein Bedienelement einstellbar. Beispielsweise kann dazu ein Durchflusswiderstand in wenigstens einem den beiden Kanälen vorgeschalteten Ventil beeinflusst werden. Dadurch wird dann der Strömungswiderstand generell erhöht oder verringert, während die wegabhängigen Dämpfungseigenschaften entsprechend erhalten bleiben.

In bevorzugten Ausgestaltungen ist eine Übergangsposition des Übergangsabschnittes vorzugsweise einstellbar. Beispielsweise kann eine Position des den zweiten Kanal verschließenden Elements über einen Schraubvorgang oder einen sonstigen Justiervorgang in Längsrichtung eingestellt werden, um die Übergangsposition einzustellen.

In bevorzugten Ausgestaltungen ist auch eine Länge des Übergangsabschnittes einstellbar und/oder justierbar. Auch ein solcher Einstellvorgang kann beispielsweise durch eine Winkeljustage eines Bauteils vorgenommen werden. Möglich ist es auch, dass über einen Austausch von Komponenten eine Länge des Übergangsabschnittes einstellbar ist.

In allen Ausgestaltungen ist es bevorzugt, dass wenigstens eine zusätzliche Drosseleinrichtung für die High-Speed-Druckstufe vorgesehen oder umfasst ist. Eine solche zusätzliche Drosseleinrichtung kann beispielsweise durch ein Ventil zur Verfügung gestellt werden, welches über eine entsprechende Feder in die Schließstellung vorbelastet ist, sodass nur bei Kräften, die die Federkraft übersteigen das ansprechende Ventil öffnet.

In allen Ausgestaltungen ist es bevorzugt, dass der Trennkolben über eine Federeinheit wie zum Beispiel eine Stahlfeder und/oder eine Gasfeder vorgespannt ist. Durch eine solche oder eine andere Federeinheit wird eine automatische Rückführung in den unbelasteten Zustand ermöglicht.

Vorzugsweise ist eine Einrichtung für eine stärkere Endanschlagsdämpfung vorgesehen. Eine solche Einrichtung kann aus einem elastischen Material bestehen. Möglich ist auch eine zusätzliche Querschnittsverengung oder eine Vergrößerung des Strömungswiderstands. So kann insbesondere auch ein Strömungsquerschnitt am Ende des Kolbenhubs verringert werden, um eine stärkere Endlagendämpfung zur Verfügung zu stellen. Dann ist die Dämpfung (für die Druckstufe) in einem Bereich am Anfang des Kolbenhubs gegenüber einem Mittelbereich reduziert und am Ende gegenüber dem Mittelbereich erhöht.

In vorteilhaften Weiterbildungen entspricht die Grundposition einer Anfangsposition mit maximal ausgetauchter Kolbenstange oder z.B. der SAG-Position oder z.B. einer Position dazwischen oder daneben.

Vorzugsweise umfasst die Stoßeinrichtung wenigstens ein Rohrsystem aus einem Standrohr und einem damit zusammenwirkenden Tauchrohr und einen Radaufnahmeraum daneben. Dabei ist das Dämpfungssystem in dem Rohrsystem angeordnet.

Die Stoßeinrichtung kann eine Aufnahme für eine Satteleinrichtung umfassen oder als Hinterraddämpfer ausgebildet sein. Vorzugsweise ist der die Stoßeinrichtung als Stoßdämpfer und insbesondere als Federgabel ausgebildet.

Mit der erfindungsgemäßen Stoßeinrichtung wird eine Wegabhängigkeit der Dämpfung zu Beginn bzw. im Bereich des Beginns des Federweges zur Verfügung gestellt. Im Stand der Technik sind wegabhängige Dämpfungen bekannt geworden, wobei dort die Wegabhängigkeit der Dämpfung nur als Durchschlagschutz gegen Ende des Federweges eingesetzt wird. Erfindungsgemäß wird nun im ersten Teil des Federweges, zum Beispiel im ersten Drittel oder in etwa der ersten Hälfte (oder auf den ersten 60%) des Federweges, die Dämpfung erheblich oder sogar stark verringert. Dadurch kann bei schneller Fahrgeschwindigkeit bei einer Abfahrt oder bei einer schnellen sitzenden Fahrt und bei weitgehend entlastetem Vorderrad die Federgabel im ersten Drittel oder auf den ersten 40% des Federwegs mit einer sehr geringen Druckstufendämpfung betrieben werden, bei der kleine und mittelgroße Hindernisse von der Federgabel einfach ausgeglichen werden. Das ermöglicht eine sehr komfortable Funktionsweise. Bei langsamer Fahrt in technischem Gelände oder beim Anbremsen sowie bei der Landung von Sprüngen und beim Auftreffen auf größere Hindernisse arbeitet die Federgabel hingegen über den ganzen Federweg, wobei dann eine starke Druckstufendämpfung erwünscht ist und zu Verfügung gestellt wird, damit die Federgabel nicht absackt.

Die Erfindung vermeidet den Nachteil, dass auch schnelle und kleine Schläge eine starke Dämpfung hervorrufen, wodurch eine unkomfortable Federgabel und/oder ein unkomfortabler Hinterraddämpfer bereitgestellt würden.

Weitere Vorteile und Merkmale der vorliegenden Erfindung ergeben sich durch die Ausführungsbeispiele, die im Folgenden mit Bezug auf die beiliegenden Figuren erläutert werden.

In den Figuren zeigen:
- Figur 1: eine schematische Seitenansicht eines Mountainbikes;
- Figur 2: eine Vorderansicht der Federgabel des Mountainbikes aus Figur 1;
- Figur 3: einen schematischen Querschnitt durch drei unterschiedlich weit eingefederte Positionen der Federgabel nach Figur 2;
- Figur 4: ein vergrößertes Detail aus Figur 3 in der Grundposition;
- Figur 5: ein vergrößertes Detail aus Figur 3 in der Übergangsposition;
- Figur 6: ein vergrößertes Detail aus Figur 3 in einer weiteren Position;
- Figur 7: einen Querschnitt durch das andere Bein der Federgabel in einer ausgefederten Position;
- Figur 8: ein vergrößertes Detail aus Figur 7;
- Figur 9: eine Darstellung gemäß Figur 8 in einer mittleren Position;
- Figur 10: eine Darstellung gemäß Figur 8 in einer Endposition;
- Figur 11: ein weiteres Federsystem für die Federgabel nach Figur 2; und
- Figur 12: ein vergrößertes Detail aus Figur 11.

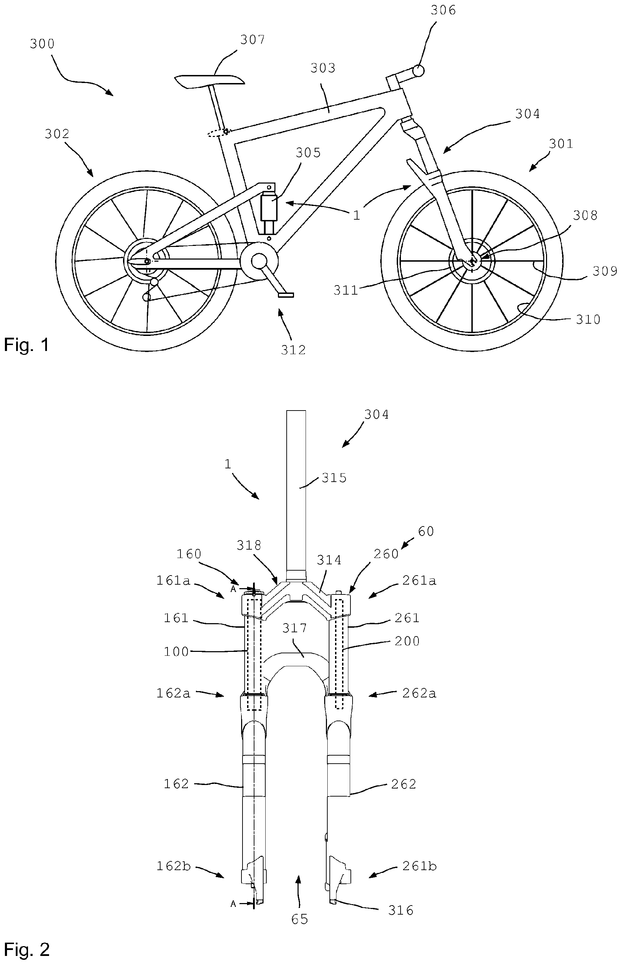

Figur 1 zeigt eine schematische Darstellung eines Mountainbikes als Fahrrad bzw. Zweirad 300. Das Fahrrad kann über einen elektrischen Hilfsantrieb verfügen. Das Fahrrad weist ein Vorderrad 301, ein Hinterrad 302, einen Rahmen 303, zwei Stoßeinrichtungen 1 als Stoßdämpfer, nämlich eine Federgabel 304 und einen Hinterraddämpfer 305, einen Lenker 306 und einen Sattel 307 auf. Als Antrieb 312 sind Pedale und hier eine Kettenschaltung vorgesehen. Es können Scheibenbremsen 311 vorgesehen sein. Das Vorderrad 301 und das Hinterrad 302 sind jeweils über eine Schnellspannvorrichtung an der Gabel 304 bzw. dem Rahmen 303 befestigt. Die Räder weisen jeweils Speichen 309 und eine Felge 310 sowie eine Nabe 308 auf. Hier umfasst das Mountainbike 300 zwei Stoßdämpfer 1, nämlich die Federgabel 304 und den Hinterradstoßdämpfer 305.

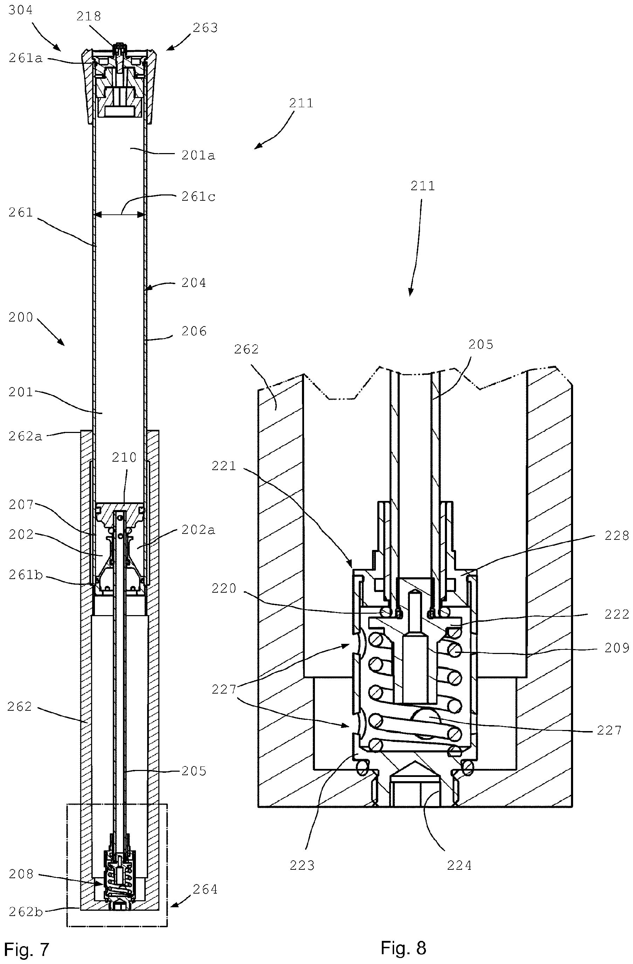

Figur 2 zeigt die Federgabel 304 des Mountainbikes 300 aus Figur 1 in einer Vorderansicht. Die Federgabel 304 umfasst einen Gabelschaft 315, der mit der oberen Einheit 318 verbunden ist. Die obere Einheit 318 umfasst des Weiteren die Gabelkrone 314 und die Standrohre 161 und 261. Die obere Einheit 318 wirkt mit der unteren Einheit 317 zusammen, die die Tauchrohre 162 und 262 umfasst. An den unteren Enden 162b, 262b der Tauchrohre 162 und 262 ist jeweils ein Ausfallende 316 vorgesehen. An den oberen Enden 161a und 261a der Standrohre 161 und 261 ist die Gabelkrone 314 vorgesehen (vgl. Fig. 7). Die oberen Enden 162a und 262a der Tauchrohre 162 und 262 umgreifen die unteren Enden 161b und 261b der Standrohre 161 und 261. Zwischen den Rohrsystemen 160 und 260 ist der Radaufnahmeraum 65 ausgebildet.

Die Federgabel 304 umfasst hier zwei Rohrsysteme 60, nämlich das Rohrsystem 160, in dem das Dämpfungssystem 100 untergebracht ist, und das Rohrsystem 260, in dem das Federsystem 200 untergebracht ist.

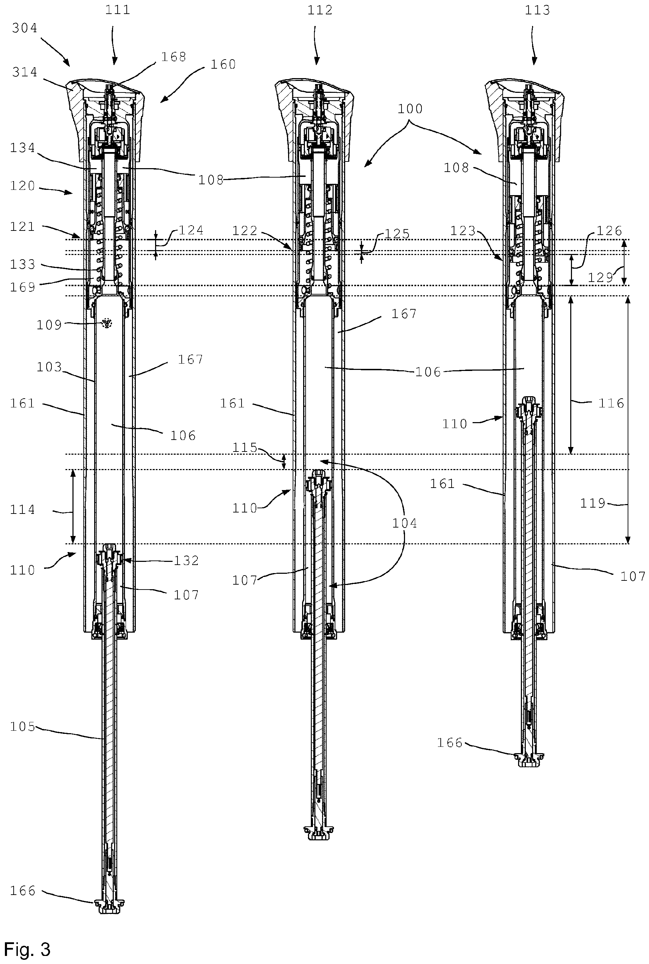

In Figur 3 sind in schematischen Querschnitten nebeneinander drei Darstellungen des Rohrsystems 160 abgebildet. In Figur 3 ist links das Rohrsystem 160 in der Grundposition 111 oder einer Anfangsposition dargestellt, während in der Mitte das Rohrsystem 160 in einer Übergangsposition 112 und rechts in einer weiter eingetauchten Position 113 dargestellt ist.

Am oberen Ende des Rohrsystems 160 ist jeweils die Gabelkrone 314 erkennbar. Am oberen Ende des Rohrsystems 160 befindet sich ein Bedienelement 168 zur Einstellung der Dämpfungseigenschaften.

Das Rohrsystem 160 umfasst ein Standrohr 161 und das hier nicht abgebildete Tauchrohr 162, welches im montierten Zustand die Kolbenstange 105 umgibt.

Im Inneren des Standrohrs 161 ist ein Dämpferzylinder 103 fest aufgenommen. Der Kolben bzw. Dämpferkolben 110 teilt das Dämpfungsvolumen 104 in eine erste Dämpfungskammer 106 und eine zweite Dämpfungskammer 107 variabel auf. In dem Kolben 110 ist eine Drosseleinheit 132 angeordnet, die den Übertritt des Dämpfungsfluids 109 von der ersten Dämpfungskammer 106 in die zweite Dämpfungskammer 107 und umgekehrt dämpft.

Beim Eintritt der Kolbenstange 105 in den Dämpferzylinder 103 tritt auch ein Volumenanteil der Kolbenstange 105 in den Dämpferzylinder 103 ein. Das entsprechende Volumen der Kolbenstange 105 muss aus dem Dämpferzylinder 103 verdrängt werden und tritt nach oben aus dem Dämpferzylinder 103 aus und wird in die Zusatzkammer 108 geleitet.

Die Zusatzkammer 108 wird durch einen Trennkolben 120 abgeteilt und stellt ein Ausgleichsvolumen 134 zur Verfügung. Der Trennkolben 120 wird durch eine Vorspanneinrichtung 133 vorgespannt.

In der in Figur 3 links dargestellten Position befindet sich die Federgabel 304 bzw. das Dämpfungssystem 100 in der Grundposition 111, die maximal ausgefedert sein kann oder aber z. B. der SAG-Position entspricht, die erreicht wird, nachdem sich der Fahrer im Stillstand auf das Fahrrad setzt.

Am unteren Ende der Kolbenstange 105 ist ein unterer Anschluss 166 ausgebildet, der mit dem in Figur 3 nicht dargestellten Tauchrohr verbunden wird. Radial zwischen der Außenwandung des Dämpferzylinders 103 und der Innenwandung des Standrohrs 161 ist ein (regelmäßig mit Luft gefüllter) Hohlraum 167 ausgebildet.

Oberhalb des Dämpferzylinders 103 befindet sich ein Hohlraum 169, in dem die Vorspanneinrichtung 133 angeordnet ist, die den Trennkolben 120 vorgespannt. Dargestellt ist hier eine Schraubenfeder 133 als Vorspanneinrichtung. Möglich ist es auch, dass der Hohlraum 169 als (ergänzende oder einzige) Luftfeder und somit als Vorspanneinrichtung 133 dient, um den Trennkolben 120 vorzuspannen.

In der Mitte von Figur 3 ist das Rohrsystem 160 der Federgabel 304 in der Übergangsposition 112 dargestellt. In dieser Übergangsposition 112 ist der Kolben 110 weiter in den Dämpferzylinder 103 eingetaucht. Dementsprechend hat sich der Trennkolben 120 aus der Grundposition 121 in die Übergangsposition 122 verschoben. Der Trennkolben hat einen ersten Wegabschnitt 124 zurückgelegt, während der Kolben 110 einen ersten Wegabschnitt 114 zurückgelegt hat. Die Wegabschnitte 114 und 124 verhalten sich proportional zueinander. Der Kolben 110 erreicht hier den Übergangsabschnitt 115 und der Trennkolben 120 den Übergangsabschnitt 125, in der der Trennkolben 120 beginnt, eine Öffnung 138 (bzw. viele auf dem Umfang verteilte Öffnungen 138) zu verschließen.

Der Dämpferzylinder 103 umfasst ein Dämpfungsvolumen 104, welches durch die erste Dämpfungskammer 106 und die zweite Dämpfungskammer 107 gebildet wird.

Wenn das Rohrsystem 160 noch weiter einfedert, ergibt sich schließlich die in Figur 3 rechts dargestellte Position, in der sich das Rohrsystem 160 und somit der Kolben 110 in einer weiter eingetauchten Position 113 befinden. Diese eingetauchte Position 113 befindet sich im zweiten Wegabschnitt 116 zwischen dem Übergangsabschnitt und der Endposition. Der zweite Wegabschnitt 116 erstreckt sich vorzugsweise über mehr als die Hälfte des Kolbenhubs 119. Vorzugsweise beträgt eine Länge des ersten Wegabschnitts 114 zu dem Kolbenhub 119 zwischen einem Fünftel und zwei Fünftel. In bevorzugten Ausgestaltungen beträgt der Anteil des ersten Wegabschnitts an dem Kolbenhub 119 etwa ein Drittel (+/- 10%).

In anderen Ausgestaltungen kann eine Länge des ersten Wegabschnitts 114 bis zu der Hälfte oder sogar 60% des Kolbenhubs 119 (oder mehr) betragen. Der zweite Wegabschnitt verkürzt sich dann entsprechend auf 30% oder 40% und der Übergangsabschnitt erstreckt sich über den Restanteil dazwischen.

Der Kolben 110 befindet sich in der rechten Darstellung in Figur 3 in der eingetauchten Position 113. Dementsprechend hat der Trennkolben 120 eine eingetauchte Position 123 eingenommen und befindet sich in dem zweiten Wegabschnitt 126. Der Trennkolben 120 kann einen Kolbenhub 129 zurücklegen.

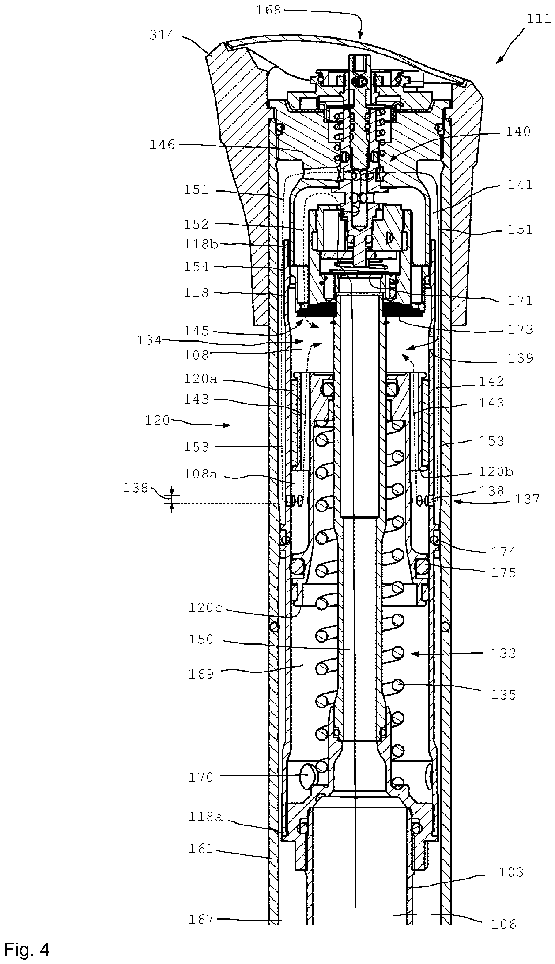

Figur 4 zeigt ein vergrößertes Detail aus der linken Darstellung von Figur 3. Dargestellt ist der obere Teil des Rohrsystems 160, wobei die Gabelkrone 314 am oberen Ende im Schnitt erkennbar ist. Einstellbar ist die Dämpfung über das Bedienelement 168.

Oberhalb des Dämpferzylinders 103 ist die Vorspanneinrichtung 133 angeordnet, die eine Stahlfeder 135 und/oder einer Gasfeder 136 umfassen kann, um den Trennkolben 120 nach oben hin vorzubelasten. Der Trennkolben trennt die Zusatzkammer 108 ab. Der Trennkolben 120 weist eine reibungsarme Buchse 120a auf dem äußeren Umfang auf. Während in einem zentralen Bereich des Trennkolbens die Vorbelastungseinrichtung 133 den Trennkolben 120 nach oben drückt, befindet sich ein Teil 108a der Zusatzkammer 108 radial außen von dem Trennkolben 120 und ein weiterer Teil oberhalb des Trennkolbens 120.

Der Dämpferzylinder 103 ist in das Standrohr 161 so eingebaut, dass sich ein radialer Leerraum bzw. Hohlraum 167 ergibt.

Im Ausführungsbeispiel ist auf das obere Ende des Dämpferzylinders 103 ein Einsatz 118 aufgesetzt. Das untere Ende 118a des Einsatzes 118 kann beispielsweise mit dem Abschluss des Dämpferzylinders 103 verschraubt sein. Der Einsatz 118 ist über wenigstens eine Dichtung 174 gegenüber der Innenfläche des Standrohrs 161 abgedichtet. Oberhalb der Dichtung 174, die sich in der Darstellung gemäß Figur 4 etwa in der Höhe Dichtung 175 des Trennkolbens 120 befindet, ist ein radialer Spalt 154 zwischen dem Einsatz 118 und der Wandung des Standrohrs 161 ausgebildet, der zum Transport von Dämpfungsfluid in die Zusatzkammer 108 genutzt wird.

In dem Einsatz 118 sind wenigstens zwei radiale Löcher (Löcherreihen oder Löcherserien) oder Öffnungen 138 und 139 ausgebildet. Die Öffnungen 138 und 139 sind in axialer Richtung des Einsatzes 118 versetzt angeordnet. Hier befinden sich in der Darstellung gemäß Figur 4 die Öffnungen 138, von denen eine Mehrzahl auf dem Umfang des Einsatzes 118 verteilt angeordnet ist, zwischen dem unteren Ende 120b der reibungsarmen Buchse 120a und der Dichtung 175 am unteren Ende 120c des Trennkolbens 120. Oberhalb der Öffnungen 139 wird im Zwischenraum zwischen dem Einsatz 118 und der Innenwandung des Standrohres 161 ein (erster) Kanal 141 gebildet. Unterhalb der Öffnungen 138 wird bis zu den Öffnungen 139 im Zwischenraum zwischen dem Einsatz 118 und der Innenwandung des Standrohres 161 ein (zweiter) Kanal 142 gebildet.

Die Öffnungen 139, von denen beispielhaft eine Öffnung 139 in Figur 4 eingezeichnet ist, sind oberhalb des oberen Endes des Trennkolbens 120 in der radialen Wandung des Einsatzes 118 ausgebildet.

Die Öffnungen 138 bilden ein Ventil 137 für den Übertritt des Dämpfungsfluids 109 aus dem Kanal 142 in die Zusatzkammer 108. Ebenso bildet auch die Öffnung 139 bzw. bilden die Öffnungen 139 ein Ventil für den Übertritt des Dämpfungsfluids 109 aus dem Kanal 141 in die Zusatzkammer 108.

Am oberen Ende 118b des Einsatzes 118 ist ein Steuereinsatz 146 in den Einsatz 118 eingeführt, sodass das untere Ende 118a des Einsatzes mit dem Dämpferzylinder 103 und das obere Ende 118b des Einsatzes 118 mit dem Steuereinsatz 146 verbunden ist.

Im Ausführungsbeispiel ist der radiale Hohlraum 167 zwischen dem Dämpferzylinder 103 und dem Standrohr 161 über Öffnungen 170 mit dem Hohlraum 169 verbunden, in dem die Vorspanneinrichtung 133 für den Trennkolben 120 untergebracht ist. Möglich ist es auch, eine Gasfeder 136 zur Vorbelastung des Trennkolbens 120 einzusetzen. Dann sind die Öffnungen 170 regelmäßig verschlossen oder nicht vorhanden.

Bei einem Einfedervorgang strömt Dämpfungsfluid 109 durch den zentralen Kanal entlang des Strömungswegs 150 nach oben in den Steuereinsatz 146 hinein. Bei schwächeren Stößen öffnet nur die Drosseleinrichtung 140 für Low-Speed und das Dämpfungsfluid kann in der in Figur 4 dargestellten ausgefederten Position entlang des Strömungsweges 151 in den Radialspalt 154 zwischen dem Einsatz 118 und der Innenwandung des Standrohrs 161 eintreten.

Von dem Radialspalt 154 kann das Dämpfungsfluid in der in Figur 4 dargestellten weiter ausgefederten Position 111 (z. B. die Grundposition 111) durch die Öffnungen 138 und 139 in die Zusatzkammer 108 eintreten. Die Öffnungen 138 und 139 stellen insgesamt einen großen Strömungsquerschnitt zu Verfügung, sodass der Einfedervorgang in der Druckstufe in der dargestellten Grundposition 111 nur leicht gedämpft wird. Der Strömungsweg 151 durch die Öffnungen 139 ist mit einem durchgezogenen Pfeil eingezeichnet. Der Strömungsweg 153 durch die Öffnungen 138 ist mit einem strichpunktierten Pfeil 153 eingezeichnet. Dabei verläuft der Strömungsweg zunächst entlang des Strömungsweges 151 in den Radialspalt 154. Ein Teil des Dämpfungsfluids 109 tritt durch die Öffnungen 139 direkt in die Zusatzkammer 108 über. Ein weiterer Teil strömt entlang des Radialspalts des 154 weiter durch den zweiten Kanal 142 bis zu den Öffnungen 138, die hier zu der Teilkammer 108a der Zusatzkammer 108 führen. Das in die Teilkammer 108a eingetretene Dämpfungsfluid 109 kann dann durch den Rückkanal 143 radial innen von der Buchse 120a nach oben in den Hauptteil der Zusatzkammer 108 geleitet werden.

Durch die beiden aktiven Öffnungen 138 und 139 wird im Bereich geringer Strömungsgeschwindigkeiten (Low-Speed) in der Druckstufe eine geringe Dämpfungsrate erzielt, sodass ein weiches Ansprechverhalten vorliegt.

Bei stärkeren Stößen wird zusätzlich noch durch die Drosseleinrichtung 145 der Strömungsweg 152 für große Geschwindigkeiten (High-Speed) geöffnet. Der Strömungsweg 152 ist mit einem gestrichelten Pfeil eingezeichnet. Bei stärkeren Stößen öffnet das Shim-Ventil 173, sodass auch der Strömungsweg 152 für eine effektive Überführung von Dämpfungsfluid 109 in die Zusatzkammer 108 zur Verfügung steht.

Das vorbelastete Einwegventil 171 ermöglicht in der Zugstufe das Rückströmen des Dämpfungsfluids 109 (insbesondere Öl).

Bei der in Figur 4 dargestellten Grundposition 111 wird bei leichten Stößen eine geringe Dämpfung bereitgestellt. Bei starken Stößen wird eine entsprechend stärkere Dämpfung zur Verfügung gestellt.

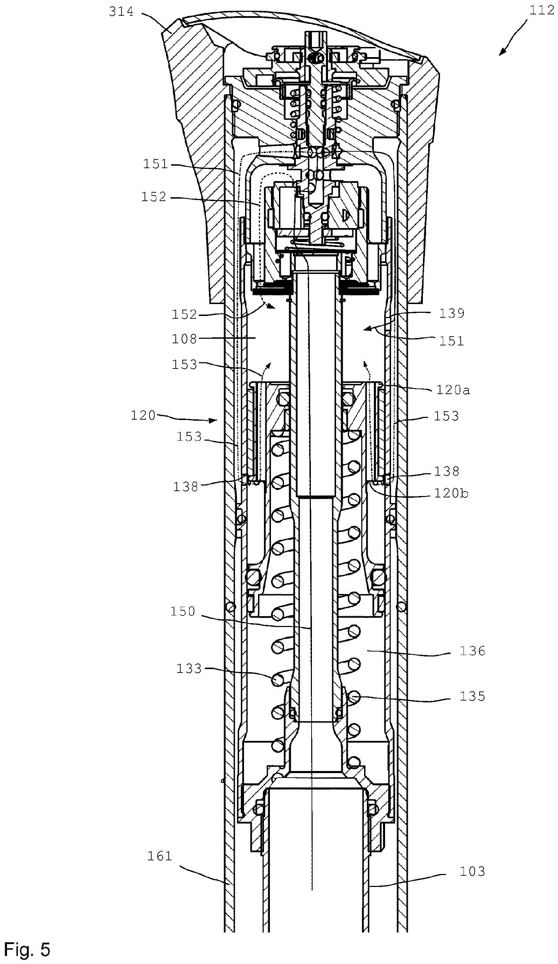

Figur 5 zeigt einen vergrößerten Bereich des Standrohrs 161 der Federgabel 304 in einer Übergangsposition 112, in der die Federgabel weiter eingefedert ist. Durch das Eintauchen der Kolbenstange 105 in den Dämpferzylinder 103 ist so viel Dämpfungsfluid 109 in die Zusatzkammer 108 verdrängt worden, dass der Trennkolben 120 entsprechend weit nach unten verschoben wurde. Dadurch wird auch das untere Ende 120b an der Buchse 120a nach unten verschoben, bis das Ende 120b in der in Figur 5 dargestellten Position schließlich beginnt, die Öffnungen 138 teilweise und schließlich vollständig zu verschließen. In diesem Bereich beginnt bzw. erstreckt sich der Übergangsabschnitt 115 des Kolbens 110 und der zugehörige Übergangsabschnitt 125 des Trennkolbens 120. Dadurch wird der strichpunktiert eingezeichnete Strömungsweg 153 für das Dämpfungsfluid 109 teilweise und schließlich vollständig verschlossen. Am Ende des Übergangsabschnitts 125 ist der Strömungsweg 153 über die Öffnungen 138 vollständig verschlossen.

Für die Dämpfung bei geringen Kolbengeschwindigkeiten steht ab dem Ende des Übergangsabschnitts 115 des Kolbens 110 bzw. der Federgabel bzw. der sich dadurch ergebenden Übergangsabschnitts 125 des Trennkolbens 120 nur noch der Strömungsweg 151 durch die Öffnung 139 aus dem Radialspalt 154 in die Zusatzkammer 108 zu Verfügung. Bei starken Stößen öffnet zusätzlich wieder das High-Speed-Ventil und es öffnet sich der Strömungsweg 152 (gestrichelt dargestellt).

In einer konkreten Ausführung beträgt der gesamte Kolbenhub 119 etwa 160 mm. Der Länge des ersten Wegabschnitts 114 beträgt ohne den Übergangsabschnitt 50 mm. Der Übergangsabschnitt 115 beginnt bei 50 mm und endet bei 70 mm. Der Übergangsabschnitt 115 und/oder 125 ist insbesondere kürzer als 25% oder 20% des maximalen Kolbenhubs 119.

Insbesondere schließt sich der zweite Wegabschnitt 114 an den Übergangsabschnitt 115 an und erstreckt sich über eine Länge von zwischen 40% und 60% des maximalen Kolbenhubs.

In Figur 5 ist zur Verdeutlichung eine Variante dargestellt, bei der gegebenenfalls keine Öffnungen 170 am unteren Ende des Einsatzes 118 vorgesehen sind. Eine solche Variante kann ohne Stahlfeder 135 und nur mit einer Gasfeder 136 betrieben werden.

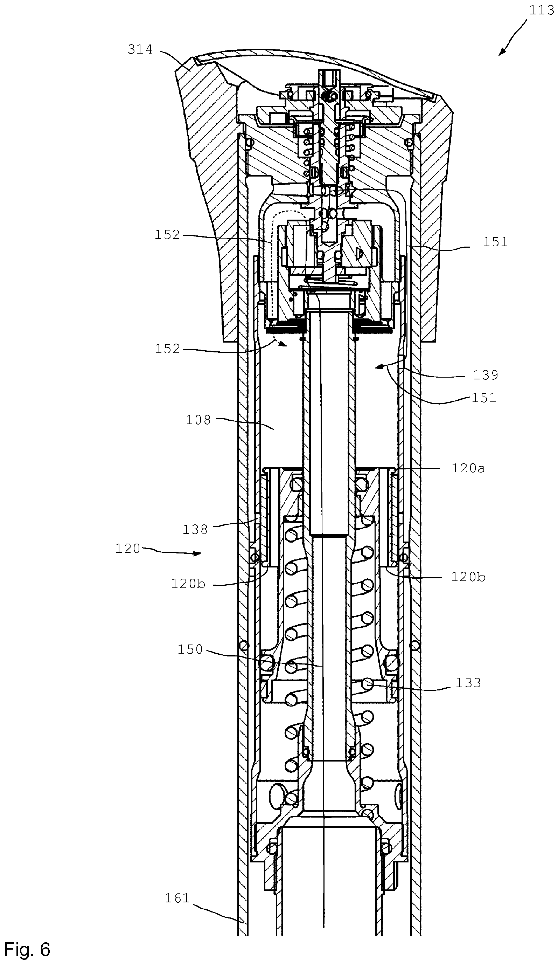

Figur 6 zeigt schließlich ein ähnliches Detail wie die Figuren 4 und 5, wobei sich die Federgabel bzw. der Kolben 110 in dem zweiten Wegabschnitt 116 befinden und somit weiter eingefedert sind. In diesem zweiten Wegabschnitt 116 befindet sich der Trennkolben 120 bzw. die Buchse 120a in dem zweiten Wegabschnitt 126 und die Buchse 120 verschließt die Öffnungen 138 vollständig. In dieser eingetauchten Position 113 steht für kleinere Stöße nur noch der Strömungsweg 151 durch die Öffnungen 139 zu Verfügung. Bei stärkeren Stößen öffnet auch der Strömungsweg 152.

In den Figuren 2-6 wurde das Dämpfungssystem 100 der Federgabel 304 erläutert. Mit Bezug auf die Figuren 7-12 wird nun das Federsystem 200 bzw. es werden verschiedene Federsysteme 200 für die Federgabel 304 erläutert.

Figur 7 zeigt einen schematischen Querschnitt durch das Rohrsystem 260. Das Rohrsystem 260 umfasst ein Rohr 261 als Standrohr und ein Rohr 262 als Tauchrohr. Die Rohre 261 und 262 teleskopieren miteinander und erstrecken sich von einem ersten und hier oberen Ende 263 zu einem zweiten und hier unteren Ende 264. Am oberen und/oder am unteren Ende können Einstellelemente für die Federeigenschaften vorgesehen sein. Am oberen Ende ist hier ein Luftventil 218 zur Befüllung der Positivluftfeder 201 vorgesehen.

Das Volumen 204 des Standrohrs 261 wird durch den Federungskolben bzw. Kolben 210 in eine Positivluftfeder 201 und eine Negativfeder 202 getrennt. In der dargestellten ausgefahrenen Position 211, die gegebenenfalls mit der Grundposition 111 des Dämpfungssystems 100 aus Figur 3 übereinstimmt, umfasst die Positivluftfeder 201 ein Volumen 201a und die Negativfeder 202 umfasst ein Volumen 202a.

Von dem Kolben 210 erstreckt sich die Kolbenstange 205 aus durch das untere Ende des Standrohrs 261 hindurch nach unten und ist am unteren Ende 264 mit dem Tauchrohr 262 verbunden.

Die Positivluftfeder 201 weist eine Positivkammer 206 auf und belastet das Federsystem 200 in die hier dargestellte ausgefahrene Position 211 vor. Die Negativfeder 202 weist eine Negativkammer 202 auf und wirkt der Kraft der Positivluftfeder 201 entgegen. Dadurch wird die Kennlinie des Federsystems 200 verbessert.

Derartige Federsysteme 200, bei denen eine Positivluftfeder und gegebenenfalls auch eine Luftfeder als Negativfeder 202 eingesetzt werden, ermöglichen Federgabeln mit einem besonders geringen Gewicht. Ein weiterer Vorteil des Einsatzes derartiger Gasfedern ist, dass durch eine Anpassung des Innendrucks eine einfache Anpassung an das Fahrergewicht erzielt werden kann. Während bei dem Einsatz von Stahlfedern die wirksame Stahlfeder bei einem (entsprechend stark) unterschiedlichen Fahrergewicht ausgetauscht werden muss, kann bei dem Einsatz von Gasfedern der Druck einfach angepasst werden.

Nachteilig bei dem Einsatz von Gasfedern ist aber die durch die nötigen Dichtungen bedingte erhöhte Reibung. Bei sehr geringen Stößen können die Reibung zwischen dem Kolben und der Innenwand des Standrohres und die Reibung zwischen der Kolbenstange und dem unteren Abschluss des Standrohrs dazu führen, dass das Ansprechverhalten einer mit Gasfedern betriebenen Federgabel nicht so weich ist, wie es manchmal wünschenswert wäre.

Die Federgabel 304 löst dieses Problem dadurch, dass am unteren Ende der Kolbenstange 205 eine Ergänzungsfeder 208 eingebaut ist. Die Ergänzungsfeder 208 weist ein Federelement 209 auf, welches insbesondere als Schraubenfeder ausgebildet ist. Eine derartige Schraubenfeder weist Prinzip bedingt praktisch keine Reibung auf. Das Ansprechverhalten der Ergänzungsfeder 208 ist viel weicher als das der Positivluftfeder 201.

Die Positivluftfeder 201 und die Ergänzungsfeder 208 sind in Reihe geschaltet, sodass bei einem kleinen Stoß die Feder zuerst wirkt, die eine kleinere Reibung überwinden muss. Das ist hier die Ergänzungsfeder 208 (sofern diese nicht vollständig eingefedert ist).

Die Maximalkraft der Ergänzungsfeder 208 ist erheblich geringer als die Maximalkraft der Positivluftfeder 201. Insbesondere ist ein Verhältnis der Federkraft der Ergänzungsfeder 208 zu einer Federkraft der Positivluftfeder 201 bei maximalen Hub der Ergänzungsfeder 208 kleiner als 20:10 und größer als 1:10.

Auch der Federweg der Ergänzungsfeder 208 ist erheblich geringer als der Federweg der Positivluftfeder 201. Hier ist das Verhältnis des Federweges der Positivluftfeder 201 zu dem Federweg der Ergänzungsfeder im vollständig ausgefederten Zustand größer als 4:1. Im Ausführungsbeispiel weist die Ergänzungsfeder 208 ein Federweg von 6 mm, 8 mm, 10 mm oder 12 mm oder 14 mm auf. Der Federweg des Federsystems 200 insgesamt beträgt vorzugsweise wenigstens 100 mm und kann 120 mm, 140 mm oder 160 mm oder 180 mm oder Werte dazwischen oder mehr betragen. Daraus ergibt sich ein Verhältnis der Federwege der Positivluftfeder und der Ergänzungsfeder 208 von größer als zehn und das Verhältnis kann einen Wert von 15 oder 20 erreichen oder übersteigen. Der Bereich des Verhältnisses der Federwege der Positivluftfeder und der Ergänzungsfeder 208 liegt vorzugsweise zwischen 5 und 30.

In vielen Fällen ist die Ergänzungsfeder 208 in der SAG-Position aber schon vollständig eingefedert. Die SAG-Position kann über den Luftdruck für den Fahrer eingestellt werden und wird meist bei 20% oder 25% oder 30% des Federwegs eingestellt. Das bedeutet, dass eine Federgabel in einer statischen Anfangsposition, in der Fahrer auf dem still stehenden Fahrrad ruhig sitzt, schon bei einem SAG von 25% und bei einem Federweg von 160 mm um etwa 40 mm eingefedert ist. Zur Verdeutlichung des Prinzips zeigt Figur 7 eine Stellung, in der die Ergänzungsfeder 208 noch nicht ganz komprimiert ist. Eine solche Position kann sich auch ergeben, wenn nach einer Einfederung die Positivluftfeder 201 und die Ergänzungsfeder 208 zunächst beide ausfedern.

Ein Verhältnis des Hubes der Positivluftfeder zu einem Federweg der Ergänzungsfeder ist insbesondere größer als ein Verhältnis des Volumens der Positivkammer zu einem Volumen der Negativkammer in der ausgefahrene Position 211. Ein Verhältnis des Volumens der Positivkammer 206 zu einem Volumen der Negativkammer in der ausgefahrenen Position 211 ist insbesondere größer als 1,6. Der Bereich der Ergänzungsfeder 208 aus Figur 7 ist in Figur 8 vergrößert dargestellt. Dabei ist erkennbar, dass die Ergänzungsfeder 208 in einem Führungsgehäuse 221 untergebracht ist. Das Führungsgehäuse 221 besteht aus einem oberen Gehäuseteil 228 und einem unteren Gehäuseteil 223. In dem Führungsgehäuse 221 sind vorzugsweise Löcher 227 vorgesehen, um einen Fluidaustausch mit dem Innenraum des Tauchrohres 262 zu ermöglichen. Das untere Gehäuseteil 223 verfügt über einen Werkzeuganschluss und hier zum Beispiel einen Innensechskant 224. Damit kann das untere Gehäuseteil 223 an dem unteren Ende 262b des Tauchrohres 262 angeschraubt werden. Bei Bedarf kann die Ergänzungsfeder 208 gegen ein stärkeres oder schwächeres Exemplar ausgetauscht werden. Im Inneren des Führungsgehäuses 221 ist das Federelement 209 der Ergänzungsfeder 208 untergebracht. Das Federelement 209 ist als Schraubenfeder ausgebildet und wirkt zwischen der unteren Stützfläche des unteren Gehäusesteils 223 und der oberen Stützeinheit 222, die mit dem unteren Ende der Kolbenstange 205 verbunden und beispielsweise verschraubt ist.

Zwischen dem unteren Ende des oberen Gehäuseteils 221 und dem oberen Ende der oberen Stützeinheit 222 kann eine Endanschlagsdämpfung 220 vorgesehen sein, die beispielsweise als elastischer Ring oder Gummiring oder dergleichen ausgeführt ist. Möglich ist der Einsatz eines O-Rings oder eines Quadrings oder eines anderen geeigneten elastischen Ringes. Durch die Endanschlagsdämpfung 220 wird ein weicher Übergang erreicht, wenn die Ergänzungsfeder 208 das Ende ihres Federwegs erreicht.

Vorzugsweise weist die Ergänzungsfeder 208 in der hier dargestellten ausgefahrenen Position 211 eine Federkraft auf, die in einem Bereich zwischen einem Viertel der Federkraft der Positivluftfeder 201 in der ausgefahrenen Position 211 und der vierfachen Federkraft der Positivluftfeder 201 in der ausgefahrenen Position 211 beträgt. In bevorzugten Ausgestaltungen liegt das Verhältnis der Federkraft zwischen 2:1 und 1:2 und kann in konkreten Ausführungen bei etwa 1:1 liegen.

Es ist möglich, das die Federkraft der Ergänzungsfeder im weit ausgefederten Zustand so gering wie möglich ist, um ein sehr sanftes Ansprechverhalten zu ermöglichen.

Es ist besonders bevorzugt, dass die Ergänzungsfeder 208 eine besonders geringe Losbrechkraft aufweist. Die Losbrechkraft der Ergänzungsfeder 208 ist insbesondere kleiner als die des restlichen Federsystems und besonders bevorzugt kleiner als die Losbrechkraft der Positivluftfeder 201. Besonders bevorzugt ist die Losbrechkraft der Ergänzungsfeder 208 null.

Dabei ist die Losbrechkraft von der wirkenden Kraft der entsprechenden Feder und des Federsystems im Betrieb zu unterscheiden. Im normalen Betrieb (oder wenn ein Fahrer auf dem Fahrrad sitzt) und sich die Stoßeinrichtung in einer Zwischenposition und z. B. in der SAG-Position befindet, sind die äußeren Kräfte und die Kräfte des Federsystems im statischen Fall im Gleichgewicht. Da die Losbrechkraft der Ergänzungsfeder 208 sehr klein ist, bewirkt jeder kleine oder auch kleinste Stoß eine entsprechende Federbewegung des Federsystems 200, sofern sich die Ergänzungsfeder 208 nicht auf Block befindet.

Ein Stoß mit einer kleineren Kraft als der Losbrechkraft der Positivluftfeder führt dann nur dazu, dass die Ergänzungsfeder einfedert. Das Federsystem reagiert auch auf kleine und kleinste Stöße. Bei Stößen mit einer Kraft auf das Federsystem 200, die größer als die Losbrechkraft der Positivluftfeder ist, bewegt sich auch die Positivluftfeder 201. In allen Fällen wird ein weiches Ansprechverhalten erreicht. Das gilt insbesondere auch dann, wenn nach einem z. B. gewissen Stoß das Federsystem 200 wieder ausfedert. Dann reagiert die Ergänzungsfeder unmittelbar und federt mit aus, sofern deren Maximalkraft nicht überschritten ist.

In einer konkreten Ausgestaltung beträgt die Federkonstante der Ergänzungsfeder 208 etwa 20 N/mm oder 28 /mm und der mögliche Hub beträgt 8 mm oder 10 mm.

Die Ergänzungsfeder 208 ermöglicht ein feineres Ansprechverhalten der Federgabel 304 und trägt zu einer Linearisierung der Kennlinie der Federgabel 304 bei. Auch wenn die Ergänzungsfeder 208 weich einfedert, ist das Dämpfungssystem 100 wirksam, sodass auch bei Federbewegungen nur der Ergänzungsfeder 208 diese Bewegungen durch das Dämpfungssystem 100 gedämpft werden.

Es wird ein Nulldurchgang der Federkennlinie erreicht, da die Ergänzungsfeder keine Losbrechkraft aufweist. Schläge auf das Handgelenk des Fahrers beim Auftreffen auf den Boden, die durch die Losbrechkraft verursacht werden, treten nicht mehr auf.

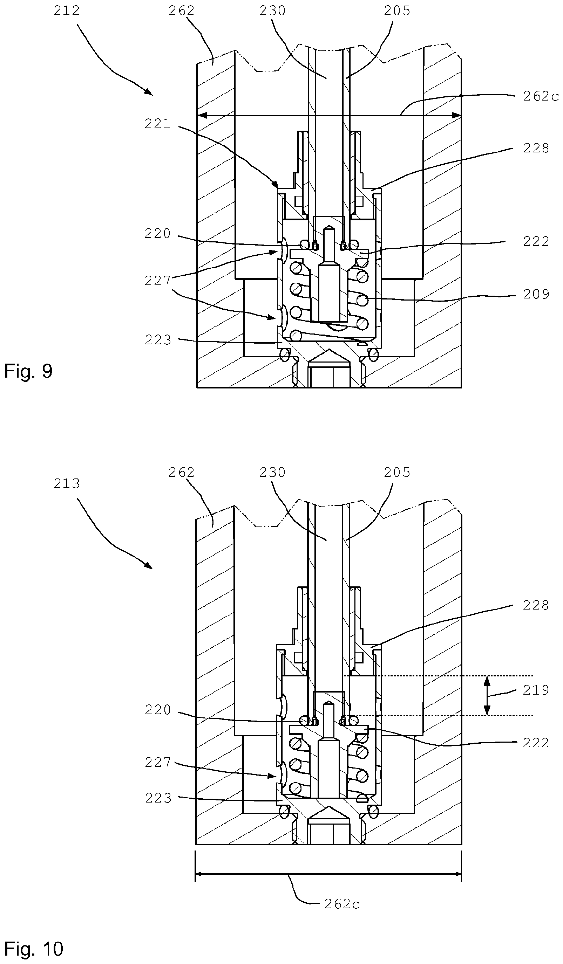

Figur 9 und 10 zeigen den Bereich der Ergänzungsfeder 208, wobei sich in Figur 9 die Ergänzungsfeder in einer Übergangsposition 212 und in Figur 10 in der Endposition 213 befindet. Der Hub 219 der Ergänzungsfeder 208 ist in Figur 10 vollständig ausgeschöpft. Der Hub 219 der Ergänzungsfeder 208 ist insbesondere kleiner als der Durchmesser 261c und 262c der Rohre 261 und 262. Der Innendurchmesser 261c des Rohres 261 beträgt hier vorzugsweise zwischen 15 und 50 mm und kann z.B. 24,6 mm betragen. Der Außendurchmesser 262c des Rohres 262 beträgt hier vorzugsweise zwischen 20 und 60 mm und kann z.B. 31,4 mm betragen. Der Hub des Federsystems insgesamt beträgt aber ein Mehrfaches (>3 oder >4 oder >5 oder >10 und hier >15) des Hubes 219. Vorzugsweise entspricht der Hub 219 wenigstens im Wesentlichen dem Kolbenhub 119 und beträgt z. B. etwa 160 mm. Wegen z. B. fertigungstechnischer Bedingungen können der Hub 219 und der Kolbenhub 119 etwas unterschiedlich sein, sind aber vorzugsweise (wenigstens fast) identisch.

Über die Ergänzungsfeder 208 kann zum Beginn des Einfederns oder dann, wenn die Ergänzungsfeder 208 nicht auf Block ist, ein besseres Ansprechverhalten erzielt werden. Dabei können die Federkraft und der Hub 219 der Ergänzungsfeder 208 so bemessen sein, dass auch in der SAG-Position noch erheblicher Hub für die Ergänzungsfeder 208 zur Verfügung steht, sodass sich die Ergänzungsfeder 208 in der SAG-Position beispielsweise in der in Figur 9 dargestellten Stellung befindet.

Es ist aber ebenso bevorzugt, dass die Ergänzungsfeder 208 im statischen Ruhezustand in der SAG-Position schon vollständig eingefedert ist. Im realen Fahrbetrieb federt die Stoßeinrichtung nach einem Stoß wieder aus. Dabei federt z. B. bei einem Sprung oder einem kurzzeitigen Verlust des Bodenkontaktes auch die Ergänzungsfeder 208 aus, sodass die Ergänzungsfeder 208 einfedern kann, wenn sie (kurz) zuvor ausgefedert hat.

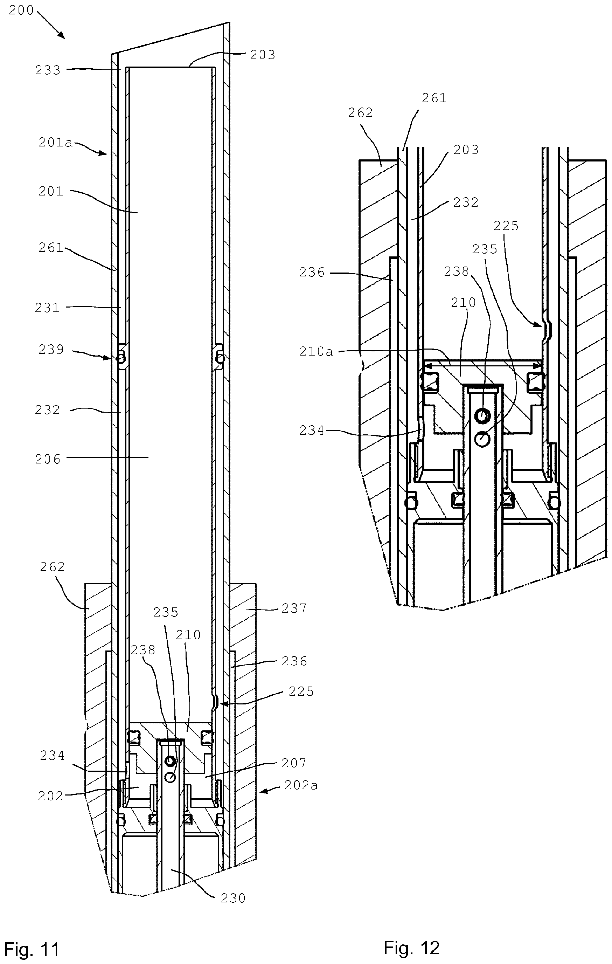

Figur 11 zeigt eine andere Ausführungsform eines Federsystems 200. Das Federsystem 200 ist hier wiederum in dem Standrohr 261 des Rohrsystems 260 angeordnet. Das Federsystem 200 gemäß Figur 11 kann ebenso wie das Federsystem 200 gemäß Figur 7 über eine mechanische Ergänzungsfeder 208 am unteren Ende der Kolbenstange 205 verfügen. Der entsprechend untere Bereich der Kolbenstange ist vorzugsweise analog zu den Figuren 7 bis 10 ausgestaltet.

Das Federsystem 200 umfasst hier eine Positivluftfeder 201 mit einer Positivkammer 206 oberhalb des Kolbens 210. Zwischen dem unteren Ende des Kolbens 210 und dem unteren Abschluss des Standrohrs 261 ist die Negativfeder 202 mit einer Negativkammer 207 angeordnet.

Der Kolben 210 läuft innerhalb einer Zylindereinrichtung 203, die in das Innere des Standrohrs 261 eingesetzt ist. Die Zylindereinrichtung 203 ist hier nach oben hin offen ausgebildet, sodass der die Zylindereinrichtung 203 umgebende Hohlraum 231 zwischen der Zylindereinrichtung und der Innenwandung des Standrohres 261 einen zusätzlichen Hohlraum 231 zur Verfügung stellt, der zum Volumen der Positivluftfeder 201 beiträgt. An einer Axialposition ist eine Dichtung 239 in dem Hohlraum zwischen der Zylindereinrichtung 203 und dem Standrohr 261 vorgesehen. Die Dichtung 239 trennt den oberen Bereich mit dem zusätzlichen Hohlraum 231 von einem unteren Bereich mit einem weiteren Hohlraum 232. Während der zusätzliche Hohlraum 231 mit der Positivkammer 206 verbunden ist, ist der weitere Hohlraum 232 mit der Negativkammer 207 über Strömungsöffnungen 234 verbunden. Der zusätzliche Hohlraum 231 ist über den Ringspalt als Strömungsöffnung 233 mit der Positivkammer 206 verbunden.

Durch den zusätzlichen Hohlraum 231 und den weiteren Hohlraum 232 wird das der Positivluftfeder 201 zu Verfügung stehende Volumen 201a und dass der Negativfeder 202 zur Verfügung stehende Volumen 202a jeweils um den zusätzlichen Hohlraum 231 bzw. den weiteren Hohlraum 232 vergrößert. Umgekehrt ausgedrückt wird die Fläche verkleinert, auf die der Kolben 210 beim Einfedern und Ausfedern einwirkt.

Das vergrößerte Volumen 201a der Positivluftfeder 201 und das vergrößerte Volumen 202a der Negativfeder 202 führen dazu, dass beim Einfedern und Ausfedern eine geringere Progression erreicht wird. Dadurch wird die Kennlinie der Federgabel linearisiert. Gegenüber einem konventionellen Federsystem mit gleichen Außenabmessungen wird das Verhältnis aus dem Volumen 201a zu dem Kolbendurchmesser 210a vergrößert. Beides bedeutet, dass sowohl die Progression der Positivluftfeder als auch die Progression der Negativluftfeder verringert werden, sodass eine insgesamt linearere Kennlinie zur Verfügung gestellt werden kann.

Des Weiteren ist es möglich, dass über eine Strömungsöffnung 235 beispielsweise die Negativkammer 207 mit dem Innenraum der Kolbenstange 205 verbunden wird. Der Innenraum der Kolbenstange 205 dient dann als (weiterer) Ergänzungshohlraum 230 für die Negativfeder.

Je nach Konstruktion ist es auch möglich, den Innenraum 230 der Kolbenstange 205 mit der Positivkammer 206 zu verbinden und von der Negativkammer 207 zu trennen. Dazu kann beispielsweise eine Längsbohrung durch den Kolben 210 eingebracht werden, die die Positivkammer 206 mit dem Ergänzungshohlraum 230 verbindet. Dementsprechend wird dann die Strömungsöffnung 235 verschlossen.

Das Bezugszeichen 238 bezeichnet ein Verbindungselement zur Verbindung des Kolbens 210 mit der Kolbenstange 205.

Der Bypass 225, der in der Darstellung gemäß Figur 11 ein wenig oberhalb von dem Kolben 210 dargestellt ist, verbindet die Positivkammer 206 mit der Negativkammer 207, wenn sich der Kolben 210 bzw. die Dichtung des Kolbens 210 in der Höhe des Bypasses 225 befindet. Dadurch kann ein Druckaustausch zwischen der Positivkammer 206 und der Negativkammer 207 in dieser Position erfolgen. Darüber findet ein automatischer Druckausgleich zwischen der Positivkammer 206 und der Negativkammer 207 statt, jedes Mal, wenn sich der Kolben 210 in einer entsprechenden Position befindet.

Das Tauchrohr 262 wird über Führungsbuchsen 237 an dem Standrohr 261 geführt. Der Leerraum 236 unterhalb der Führungsbuchse 237 dient zur Verminderung der Reibung.

Figur 12 zeigt einen vergrößerten Ausschnitt aus Figur 11, in dem die Öffnung 234 und der Bypass 225 besser erkennbar sind.

Insgesamt stellt die Federgabel ein vorteilhaftes System zur Verfügung, bei dem in einem ersten Federwegbereich eine weichere Dämpfung und eine weichere Federung ermöglicht wird. Die Dämpfung wird dabei wegabhängig verändert. Während nur über einen ersten Weganteil die Dämpfung stark verringert wird, wird die Dämpfung nach beispielsweise einem Drittel oder 40% des Federweges auf ein Normalmaß zurückgeführt.

Bei der Federung wird durch die Ergänzungsfeder 208 ebenfalls ein weicheres Ansprechverhalten ermöglicht. Dadurch können kleine Stöße und Bodenunebenheiten besser gedämpft werden. Durch eine Vergrößerung des Verhältnisses von Federvolumen zu Kolbenfläche kann eine noch weiter verbesserte Linearisierung der Federkennlinie erreicht werden.

Das Federsystem 200 ermöglicht es, die typische Wellenform einer Luftfeder-Kennlinie, zu linearisieren.

Generell ist es für diese Anmeldung wichtig zu beachten, dass beim Fahren das Vorderrad eines Fahrrads sehr häufig den Bodenkontakt verlässt. Die Federgabel federt dabei jedes Mal (komplett) aus und somit kommt die Ergänzungsfeder dann auch in Einsatz, selbst wenn die Ergänzungsfeder 208 in der statischen SAG-Position schon auf Block ist!

Bei einem Luftfedersystem gibt es Dichtungen am Kolben und an der Kolbenstange, die Reibung erzeugen. Die Losbrechkraft oder Haftreibung (die nötige Kraft, um eine Bewegung zu erzeugen) ist besonders unerwünscht, wenn man ein sanftes Ansprechen einer z. B. als Federgabel ausgebildeten Stoßeinrichtung erzielen will.

Die Ergänzungsfeder 208 in der Kolbenstange ermöglicht eine Bewegung der Federgabel, schon bevor die Losbrechkraft (Reibungskraft) erreicht oder überschritten wird. In einem konkreten Beispiel durchgeführte Messungen ergaben eine Losbrechkraft von 20N.

Streng genommen hat ein Luftfedersystem an sich keine Federkennlinie (Kraftverlauf dargestellt über den Federweg), die durch den Nullpunkt des Koordinatensystems verläuft, wo der Federweg und die Kraft jeweils null betragen. Das liegt an der Losbrechkraft, die überwunden werden muss, damit eine Stoßeinrichtung einfedert. Eine mit einer Ergänzungsfeder 208 ausgerüstete Stoßeinrichtung 1 ermöglicht hingegen eine sofortige Bewegung der Stoßeinrichtung 1 (z. B. einer Federgabel), auch wenn sich die Positivluftfeder an sich bei einer Kraft größer oder gleich 28 N (oder je nach Ausgestaltung z. B. 20 N) anfängt zu bewegen. Die Ergänzungsfeder 208 macht es möglich, dass jedes Mal, wenn das Rad am Boden ankommt, direkt gefedert wird. Ohne eine solche Ergänzungsfeder 208 könnte ein Schlag von 20N ungefedert in die Hände des Fahrers weitergeleitet werden. Die Federkennlinie verläuft durch den Nullpunkt.

Ein Federsystem 200 weist eine linearere Kennlinie auf und hat erhebliche Vorteile. Das Federsystem 200 bietet ein sanftes Ansprechverhalten, weil im ersten Bereich (bzw. bis sich die Kurven der Positivluftfeder und der Ergänzungsfeder treffen) des Federwegs weniger Kraft benötigt wird, um einen gleiches Hindernis zu überfahren bzw. den gleichen Federweg abzufahren.

Im mittleren Bereich des Federwegs wird eine verbesserte Stützwirkung erzielt, weil der Federweg insgesamt linearer verläuft.

Grundsätzlich ist eine Stahlfeder linearer als ein konventionelles Luftfedersystem mit einer Positivluftfeder und einer Negativluftfeder. Bei einem konventionellen Luftfedersystem hat bei gleichem Kraftanstieg das konventionelle Luftfedersystem deutlich mehr Weg zurücklegt, als eine lineare Stahlfeder. Das kann bei konventionellen Luftfedersystemen zu einem Abtauchen der Federgabel in Situationen führen, wo die Federgabel schon leicht eingefedert ist, wie zum Beispiel beim Bremsen bei einer Abfahrt mit Hindernissen auf dem Weg. Dadurch bleibt dann nur noch relativ wenig Federweg übrig, was dem Fahrer ein unsicheres Gefühl geben kann, weil die Last noch weiter nach vorne verlagert wird und nur noch wenig Reservefederweg übrig bleibt für ein unerwartetes Ereignis. Die hier vorgestellte Stoßeinrichtung 1 bietet demgegenüber ein besser berechenbares Verhalten und somit ein sichereres Gefühl für den Fahrer.

Bei der Stoßeinrichtung 1 wird vorzugsweise zur besseren Linearisierung der Kennlinie des Federsystems 200 das Volumen von beiden Luftkammern (Positivluftkammer und Negativkammer) gegenüber dem Stand der Technik vergrößert bzw. relativ zu dem Volumen der Luftkammern der Durchmesser des Kolbens verringert. Dadurch wird eine geringere Progression an beiden Enden des Federwegs erreicht und eine typische "Welle" oder umgekehrte "S-Form" der Luftfederung wird kleiner.

Vorteilhaft ist, dass die Ergänzungsfeder 208 in Serie mit der Luftfederung (Positivluftfeder und Negativfeder) geschaltet ist, die in einem ersten Bereich des Federwegs wirkt. Im Ausführungsbeispiel wirkt die Ergänzungsfeder 208 bis die Kraft der Ergänzungsfeder 208 auf die Federgabel 224 Newton (N) erreicht.

Beim Vergleich von zwei gleich eingestellten Federgabeln (einmal konventionell ohne Ergänzungsfeder und einmal eine Stoßeinrichtung 1 mit Ergänzungsfeder 208) mit jeweils z. B. gleichen SAG von 25% ist klar erkennbar, dass vor der SAG-Position ein sanfteres Ansprechverhalten vorliegt, weil der Verlauf der Kraft über dem Federweg unterhalb dem Verlauf der konventionellen Federgabel verläuft. Oberhalb der SAG-Position (bei größerem Federweg) ist der Verlauf deutlich linearer und somit für den Fahrer besser abschätzbar oder berechenbar. Durch die Ergänzungsfeder wird das Federsystem feinfühliger und kann auch bei sehr geringen Kräften wirken, während bei einem konventionellen Luftfedersystem erst eine nicht zu vernachlässigende Losbrechkraft überwunden werden muss. Die Traktion wird verbessert.

**Bezugszeichenliste:**

| | | | |
|---|---|---|---|
| 1 | Stoßeinrichtung, Stoßdämpfer | 132 | Drosseleinheit |
| | | 133 | Vorspanneinrichtung |
| 60 | Rohrsystem | 134 | Ausgleichsvolumen |
| 65 | Radaufnahmeraum | 135 | Stahlfeder |
| 100 | Dämpfungssystem | 136 | Gasfeder |
| 103 | Dämpferzylinder | 137 | Ventil |
| 104 | Dämpfungsvolumen | 138 | Öffnung von 137 |
| 105 | Kolbenstange | 139 | Öffnung |
| 106 | erste Dämpfungskammer | 140 | Drosseleinrichtung |
| 107 | zweite Dämpfungskammer | | Low-Speed |
| 108 | Zusatzkammer | 141 | erster Kanal |
| 108a | Teilkammer von 108 | 142 | zweiter Kanal |
| 109 | Dämpfungsfluid | 143 | Rückkanal |
| 110 | Kolben | 145 | Drosseleinrichtung High-Speed |
| 111 | Grund-, Anfangsposition | | |
| 112 | Übergangsposition | 146 | Steuereinsatz |
| 113 | eingetauchte Position | 150 | Strömungsweg |
| 114 | erster Wegabschnitt | 151 | Strömungsweg |
| 115 | Übergangsabschnitt | 152 | Strömungsweg |
| 116 | zweiter Wegabschnitt | 153 | Strömungsweg |
| 118 | Einsatz | 154 | Radialspalt |
| 118a | unteres Ende | 160 | Rohrsystem |
| 118b | oberes Ende | 161 | Standrohr |
| 119 | Kolbenhub | 162 | Tauchrohr |
| 120 | Trennkolben | 166 | unterer Anschluss |
| 120a | Buchse | 167 | Hohlraum an 161 |
| 120b | unteres Ende von 120a | 168 | Bedienelement |
| 120c | unteres Ende von 120 | 169 | Hohlraum an 161 |
| 121 | Grundposition, | 170 | Öffnung |
| | Anfangsposition | 171 | Shim |
| 122 | Übergangsposition | 173 | Shim |
| 123 | eingetauchte Position | 174 | Dichtung |
| 124 | erster Wegabschnitt | 175 | Dichtung |
| 125 | Übergangsabschnitt | 200 | Federsystem |
| 126 | weiter eingetauchter Wegabschnitt | 201 | Positivluftfeder |
| | | 201a | Volumen von 201 |
| 129 | Kolbenhub | 202 | Negativfeder |
| 202a | Volumen von 202 | 238 | Verbindungselement 205+210 |
| 203 | Zylindereinrichtung | | |
| 204 | Volumen (in 261) | 239 | Dichtung zw. 231+232 |
| 205 | Kolbenstange | 251 | Luftvolumen |
| 206 | Positivkammer | 252 | Luftvolumen |
| 207 | Negativkammer | 260 | Rohrsystem |
| 208 | Ergänzungsfeder | 261 | Rohr, Standrohr |
| 209 | Federelement, Schraubenfeder | 261a | 1. Ende von 261 |
| | | 261b | 2. Ende von 261 |
| 210 | Kolben | 261c | Durchmesser |
| 210a | Durchmesser von 210 | 262 | Rohr, Tauchrohr |
| 211 | ausgefahrene Position Grundposition | 262a | 1. Ende von 262 |
| | | 262b | 2. Ende von 262 |
| 212 | Übergangsposition | 262c | Durchmesser |
| 213 | eingetauchte Position, Endposition | 263 | 1. Ende |
| | | 264 | 2. Ende |
| 218 | Luftventil für 201 | 300 | Zweirad, Fahrrad |
| 219 | Hub von 208 | 301 | Rad, Vorderrad |
| 220 | Endanschlagsdämpfung | 302 | Rad, Hinterrad |
| 221 | Führungsgehäuse | 303 | Rahmen |
| 222 | (obere) Stützeinheit | 304 | Federgabel |
| 223 | (unteres) Gehäuseteil | 305 | Dämpfer |
| | von 221 | 306 | Lenker |
| 224 | Innensechskant | 307 | Sattel |
| 225 | Bypass | 308 | Nabe |
| 227 | Loch in 221 | 309 | Speiche |
| 228 | (oberes) Gehäuseteil von 221 | 310 | Felge |
| | | 311 | Scheibenbremse |
| 230 | Ergänzungshohlraum (Innenraum von 205) | 312 | Antrieb |
| | | 314 | Gabelkrone |
| 231 | zusätzlicher Hohlraum für 201 | 315 | Gabelschaft |
| | | 316 | Ausfallende |
| 232 | weiterer Hohlraum für 202 | 317 | untere Einheit (Lower) |
| | | 318 | obere Einheit |
| 233 | Strömungsöffnung zu 231 | | |
| 234 | Strömungsöffnung zu 232 | | |
| 235 | Strömungsöffnung zu 230 | | |
| 236 | Leerraum | | |
| 237 | Führungsbuchse | | |

## Patentansprüche

1. Stoßeinrichtung (1) für ein wenigstens teilweise muskelbetriebenes Zweirad (300) umfassend ein Dämpfungssystem (100) mit einem Dämpferzylinder (103) und einem darin angeordneten beweglichen Kolben (110), der mit einer aus dem Dämpferzylinder (103) herausgeführten Kolbenstange (105) verbunden ist,
wobei der Kolben (110) beim Eintauchen der Kolbenstange (105) von einer weiter ausgetauchten Grundposition (111) in eine weiter eingetauchte Position (113) auf eine erste Dämpfungskammer (106) in dem Dämpferzylinder (103) einwirkt, wobei das Dämpfungssystem (100) derart ausgebildet ist, dass beim Eintauchen der Kolbenstange (105) Dämpfungsfluid (109) von der ersten Dämpfungskammer (106) zu einer Zusatzkammer (108) überführt wird,
wobei ein Strömungswiderstand zum Überführen des Dämpfungsfluids (109) in die Zusatzkammer (108) wegabhängig ausgebildet ist und von einer Kolbenposition (111-113) abhängt und wobei der Strömungswiderstand in einem die Grundposition (111) einschließenden ersten Wegabschnitt (114) des Kolbens (110) kleiner ist als in wenigstens einem weiter eingetauchten zweiten Wegabschnitt (116), wobei zwischen dem ersten Wegabschnitt und dem zweiten Wegabschnitt ein Übergangsabschnitt vorgesehen ist, wobei die Zusatzkammer (108) ein Ausgleichsvolumen (134) für ein Volumen der Kolbenstange (105) bildet und wobei an der Zusatzkammer (108) ein durch eine Vorspanneinrichtung (133) vorbelasteter Trennkolben (120) vorgesehen ist, wobei eine Position (121-123) des Trennkolbens (120) abhängig von einer Kolbenposition (110) ist, **dadurch gekennzeichnet, dass** in die Zusatzkammer (108) wenigstens ein erster (141) und ein zweiter Kanal (142) hineinführen, um Dämpfungsfluid (109) in die Zusatzkammer (108) einzuleiten,
und dass der zweite Kanal (142) durch den Trennkolben (120) wenigstens teilweise verschlossen wird, wenn sich der Kolben (110) in dem Übergangsabschnitt (115) befindet.

2. Stoßeinrichtung (1) nach dem vorhergehenden Anspruch, wobei sich der erste Wegabschnitt (114) über eine Länge erstreckt, die kürzer ist als 60% oder 1/2 oder 40% des maximalen Kolbenhubs (119).

3. Stoßeinrichtung (1) nach einem der vorhergehenden Ansprüche, wobei der Strömungswiderstand in dem ersten Wegabschnitt (114) im Wesentlichen unverändert bleibt.

4. Stoßeinrichtung (1) nach einem der vorhergehenden Ansprüche, wobei der Strömungswiderstand durch eine Veränderung des wirksamen Strömungsquerschnitts beeinflusst wird und/oder wobei der Strömungswiderstand durch eine Veränderung einer Länge eines Strömungsweges beeinflusst wird und/oder wobei der Strömungswiderstand durch eine Veränderung eines Durchflusswiderstandes eines Strömungsventils beeinflusst wird.

5. Stoßeinrichtung (1) nach dem vorhergehenden Anspruch, wobei sich an den ersten Wegabschnitt (114) ein Übergangsabschnitt (115) anschließt, in welchem der Strömungsquerschnitt verringert wird, wobei insbesondere der Übergangsabschnitt (115) kürzer als 25% oder 20% des maximalen Kolbenhubs (119) ist und wobei sich insbesondere der zweite Wegabschnitt (114) an den Übergangsabschnitt (115) anschließt und sich über eine Länge von zwischen 40% und 60% des maximalen Kolbenhubs (119) erstreckt.

6. Stoßeinrichtung (1) nach einem der vorhergehenden Ansprüche, wobei der Kolben (110) in dem Dämpferzylinder (103) ein Dämpfungsvolumen (104) variabel in die erste Dämpfungskammer (106) und eine zweite Dämpfungskammer (107) teilt und/oder wobei der Kolben (110) mit wenigstens einer Drosseleinheit (132) ausgerüstet ist.

7. Stoßeinrichtung nach einem der vorhergehenden Ansprüche, wobei der zweite Kanal (142) im Wesentlichen verschlossen ist, wenn sich der Kolben (110) in einem zweiten Wegabschnitt (116) befindet, der sich an den Übergangsabschnitt (115) anschließt, wobei sich der erste Wegabschnitt (114) und der Übergangsabschnitt (115) über weniger als die Hälfte des Kolbenhubs (119) erstrecken.

8. Stoßeinrichtung (1) nach einem der vorhergehenden Ansprüche, wobei der erste Kanal (141) und der zweite Kanal (142) Strömungskanäle einer Drosseleinrichtung (140) für die Druckstufe sind.

9. Stoßeinrichtung nach dem vorhergehenden Anspruch, wobei der Strömungswiderstand der Drosseleinrichtung (140) für die Druckstufe von außen über wenigstens ein Bedienelement (168) einstellbar ist.

10. Stoßeinrichtung nach einem der vorhergehenden Ansprüche, wobei eine Übergangsposition (112) des Übergangsabschnittes (115) einstellbar ist und/oder wobei eine Länge des Übergangabschnittes (115) einstellbar ist.

11. Stoßeinrichtung nach einem der vorhergehenden Ansprüche, wobei eine zusätzliche Drosseleinrichtung (145) für die High-Speed-Druckstufe vorgesehen ist und/oder wobei der Trennkolben (120) über eine Stahlfeder (135) und/oder eine Gasfeder (136) vorgespannt ist.

12. Stoßeinrichtung nach einem der vorhergehenden Ansprüche, wobei eine Einrichtung für eine stärkere Endanschlagsdämpfung vorgesehen ist.

13. Stoßeinrichtung nach einem der vorhergehenden Ansprüche, wobei die Grundposition (111) eine Anfangsposition (111) mit maximal ausgetauchter Kolbenstange (105) oder die Sag-Position ist.

14. Stoßeinrichtung nach einem der vorhergehenden Ansprüche, umfassend wenigstens ein Rohrsystem (160) aus einem Standrohr (161) und einem damit zusammenwirkenden Tauchrohr (162) und einen Radaufnahmeraum (65) daneben, wobei das Dämpfungssystem (100) in dem Rohrsystem (160) angeordnet ist.

15. Stoßeinrichtung nach einem der vorhergehenden Ansprüche, umfassend eine Aufnahme für eine Satteleinrichtung (307) oder ausgebildet als Hinterraddämpfer (305) oder als Federgabel (304) .

## Claims

1. Shock device (1) for an at least partially muscle-powered two-wheeled vehicle (300) comprising a damping system (100) having a damper cylinder (103) and a moving piston (110) disposed therein, which is connected with a piston rod (105) leading out of the damper cylinder (103),
wherein the piston (110) acts on a first damping chamber (106) in the damper cylinder (103) as the piston rod (105) plunges in from a farther retracted base position (111) to a farther plunged in position (113), wherein the damping system (100) is configured such that as the piston rod (105) plunges in, damping fluid (109) is transferred from the first damping chamber (106) to an auxiliary chamber (108),
wherein the flow resistance for transferring the damping fluid (109) into the auxiliary chamber (108) is configured travel-dependent and depends on the piston position (111-113) and wherein the flow resistance is smaller in a first travel distance (114) of the piston (110) including the base position (111) than in at least one second travel distance (116) that is plunged in farther,
wherein a transition section is provided between the first travel distance and the second travel distance, wherein the auxiliary chamber (108) establishes an equalizing volume (134) for the volume of the piston rod (105) and wherein the auxiliary chamber (108) is provided with a dividing piston (120) that is biased by a biasing device (133)
wherein the position (121-123) of the dividing piston (120) is dependent on the piston position (110),
**characterized in that** at least one first (141) and one second duct (142) lead into the auxiliary chamber (108) to feed damping fluid (109) into the auxiliary chamber (108),
and that the second duct (142) is at least partially closed by the dividing piston (120) when the piston (110) is located in the transition section (115).

2. The shock device (1) according to the preceding claim wherein the first travel distance (114) extends over a length that is shorter than 60% or 1/2 or 40% of the maximum piston stroke (119).

3. The shock device (1) according to any of the preceding claims wherein the flow resistance remains substantially unchanged in the first travel distance (114).

4. The shock device (1) according to any of the preceding claims wherein the flow resistance is influenced by varying the effective flow cross-section and/or wherein the flow resistance is influenced by varying the length of the flow path and/or wherein the flow resistance is influenced by varying the passage resistance of a flow valve.

5. The shock device (1) according to the preceding claim wherein the first travel distance (114) is followed by a transition section (115) in which the flow cross-section is reduced, wherein in particular the transition section (115) is shorter than 25% or 20% of the maximum piston stroke (119) and wherein in particular the second travel distance (114) follows the transition section (115) and extends over a length between 40% and 60% of the maximum piston stroke (119).

6. The shock device (1) according to any of the preceding claims wherein the piston (110) variably divides the damping volume (104) in the damper cylinder (103) into a first damping chamber (106) and a second damping chamber (107) and/or wherein the piston (110) is equipped with at least one throttle unit (132).

7. The shock device according to any of the preceding claims wherein the second duct (142) is substantially closed when the piston (110) is located in a second travel distance (116) following the transition section (115), wherein the first travel distance (114) and the transition section (115) extend over less than half of the piston stroke (119).

8. The shock device (1) according to any of the preceding claims wherein the first duct (141) and the second duct (142) are flow ducts of a throttle (140) for the compression stage.

9. The shock device according to the preceding claim wherein the flow resistance of the throttle (140) for the compression stage is adjustable from outside by way of at least one operating member (168).

10. The shock device according to any of the preceding claims wherein the transition position (112) of the transition section (115) is adjustable and/or wherein the length of the transition section (115) is adjustable.

11. The shock device according to any of the preceding claims wherein an additional throttle (145) for the high speed compression stage is provided and/or wherein the dividing piston (120) is biased by means of a steel spring (135) and/or a gas spring (136).

12. The shock device according to any of the preceding claims wherein a device for stronger top-out damping is provided.

13. The shock device according to any of the preceding claims wherein the base position (111) is an initial position (111) with the piston rod (105) extended to its maximum, or the sag position.

14. The shock device according to any of the preceding claims, comprising at least one tube system (160) including a stanchion tube (161) and a cooperating slider tube (162) and an adjacent wheel receiving space (65) wherein the damping system (100) is disposed in the tube system (160).

15. The shock device according to any of the preceding claims, comprising an accommodation for a saddle device (307) or being configured as a rear wheel damper (305) or a suspension fork (304) .

## Revendications

1. Dispositif d'absorption de choc (1) pour un deux roues (300) entraîné au moins partiellement par force musculaire, comprenant un système amortisseur (100) doté d'un vérin d'amortissement (103) et d'un piston (110) qui y est agencé mobile et qui est relié à une tige de piston (105) guidée hors du vérin d'amortissement (103),
dans lequel, lorsque la tige de piston (105) s'enfonce d'une position de base (111) plus en sortie dans une position (113) de plongée plus enfoncée, le piston (110) exerce une action sur une première chambre d'amortissement (106) dans le vérin d'amortissement (103), dans lequel le système amortisseur (100) est réalisé de telle sorte que lorsque la tige de piston (105) s'enfonce, du fluide d'amortissement (109) est transféré de la première chambre d'amortissement (106) à une chambre supplémentaire (108),
dans lequel une résistance à l'écoulement au transfert du fluide d'amortissement (109) dans la chambre supplémentaire (108) est réalisée en fonction de la course et dépend d'une position du piston (111-113), et dans lequel la résistance d'écoulement est, dans une première partie de course (114) du piston (110) englobant la position de base (111), inférieure à celle dans au moins une deuxième partie de course (116) plus enfoncée, dans lequel une partie de transition est prévue entre la première partie de course et la deuxième partie de course, dans lequel la chambre supplémentaire (108) forme un volume de compensation (134) pour un volume de la tige de piston (105) et dans lequel un piston séparateur (120) précontraint par un dispositif de précontrainte (133) est prévu au niveau de la chambre supplémentaire (108), dans lequel une position (121-123) du piston séparateur (120) dépend d'une position de piston (110), **caractérisé en ce qu'**au moins un premier (141) et un deuxième canal (142) passent dans la chambre supplémentaire (108) pour introduire du fluide d'amortissement (109) dans la chambre supplémentaire (108),
et **en ce que** le deuxième canal (142) est obstrué au moins partiellement par le piston séparateur (120) lorsque le piston (110) se trouve dans la partie de transition (115).

2. Dispositif d'absorption de choc (1) selon la revendication précédente, dans lequel la première partie de course (114) s'étend sur une longueur qui est inférieure à 60% ou 1/2 ou 40% de la course maximale du piston (119).

3. Dispositif d'absorption de choc (1) selon l'une quelconque des revendications précédentes, dans lequel la résistance à l'écoulement reste sensiblement inchangée dans la première partie de course (114).

4. Dispositif d'absorption de choc (1) selon l'une quelconque des revendications précédentes, dans lequel la résistance à l'écoulement est influencée par un changement dans la section efficace d'écoulement et/ou dans lequel la résistance à l'écoulement est influencée par un changement dans une longueur d'une voie d'écoulement, et/ou la résistance à l'écoulement est influencée par un changement dans une résistance au débit d'une vanne d'écoulement.

5. Dispositif d'absorption de choc (1) selon la revendication précédente, dans lequel une partie de transition (115) est en prolongement de la première partie de course (114), dans laquelle partie de transition la section d'écoulement est rétrécie, dans lequel notamment la partie de transition (115) est plus courte que 25% ou 20% de la course maximale du piston (119) et dans lequel notamment la deuxième partie de course (114) est en prolongement de la partie de transition (115) et s'étend sur une longueur d'entre 40% à 60% de la course maximale du piston (119).

6. Dispositif d'absorption de choc (1) selon l'une quelconque des revendications précédentes, dans lequel le piston (110) dans le vérin d'amortissement (103) divise un volume d'amortissement (104) de manière variable dans la première chambre d'amortissement (106) et une deuxième chambre d'amortissement (107) et/ou dans lequel le piston (110) est équipé d'au moins une unité d'étranglement (132).

7. Dispositif d'absorption de choc selon l'une quelconque des revendications précédentes, dans lequel le deuxième canal (142) est sensiblement obstrué lorsque le piston (110) se trouve dans une deuxième partie de course (116) qui est dans le prolongement de la partie de transition (115), dans lequel la première partie de course (114) et la partie de transition (115) s'étendent sur moins de la moitié de la course du piston (119).

8. Dispositif d'absorption de choc (1) selon l'une quelconque des revendications précédentes, dans lequel le premier canal (141) et le deuxième canal (142) sont des canaux d'écoulement d'un dispositif d'étranglement (140) pour le cycle de compression.

9. Dispositif d'absorption de choc selon la revendication précédente, dans lequel la résistance à l'écoulement du dispositif d'étranglement (140) peut être réglée, pour le cycle de compression, de l'extérieur par au moins un élément de commande (168).

10. Dispositif d'absorption de choc selon l'une quelconque des revendications précédentes, dans lequel on peut régler une position transitoire (112) de la partie de transition (115) et/ou dans lequel on peut régler une longueur de la partie de transition (115).

11. Dispositif d'absorption de choc selon l'une quelconque des revendications précédentes, dans lequel un dispositif d'étranglement (145) supplémentaire est prévu pour le cycle de compression haute vitesse et/ou dans lequel le piston séparateur (120) est précontraint en tension par le biais d'un ressort en acier (135) et/ou d'un amortisseur à gaz (136).

12. Dispositif d'absorption de choc selon l'une quelconque des revendications précédentes, dans lequel un dispositif est prévu pour un amortissement de fin de butée plus fort.

13. Dispositif d'absorption de choc selon l'une quelconque des revendications précédentes, dans lequel la position de base (111) est une position de départ (111) où la tige de piston (105) est sortie au maximum, ou la position sag.

14. Dispositif d'absorption de choc selon l'une quelconque des revendications précédentes, comprenant au moins un système de tuyaux (160), composé d'un tube montant (161) et d'un tube plongeur (162) coopérant avec celui-ci, et un espace de logement de roue (65) à côté, dans lequel le système amortisseur (100) est agencé dans le système de tuyaux (160).

15. Dispositif d'absorption de choc selon l'une quelconque des revendications précédentes, comprenant un logement pour un dispositif de selle (307) ou réalisé sous forme d'amortisseur de roue arrière (305) ou de fourche de suspension (304).
